# EUROPEAN PATENT APPLICATION

(11) **EP 3 051 784 A1**
(43) Date of publication of application: **03.08.2016**
(21) Application number: 15187746.1
(22) Date of filing: 30.09.2015
(51) Int. Cl.: H04M 1/725, H04M 1/60

(54) **OPERATING A VEHICLE AND A WEARABLE DEVICE**

(30) Priority: 30.01.2015 KR 20150015240
(71) Applicant: LG Electronics Inc., Yeongdeungpo-gu Seoul 150-721 (KR)
(72) Inventor: KIM, Woosik, 150-721 Seoul (KR); HONG, Sungwook, 150-721 Seoul (KR); PARK, Minho, 150-721 Seoul (KR)
(74) Representative: Greenaway, Martin William

(57) **Abstract**

Techniques are disclosed for operating a vehicle and a wearable device. Based on a wearable device being electrically connected through an interface unit of the vehicle, the vehicle is configured to provide, to the wearable device and through the interface unit, energy that charges a battery of the wearable device. A control unit of the vehicle is configured to connect to a mobile communication network through the wearable device, and receives, from the wearable device, information received by the wearable device through the mobile communication network. An output unit of the vehicle is configured to output the received information.

## Description

### CROSS-REFERENCE TO RELATED APPLICATIONS

This application claims the benefit of an earlier filing date and right of priority to Korean Patent Application Number 10-2015-0015240, filed on Janaury 30, 2015, the entire contents of which are incorporated by reference in their entirety.

### TECHNICAL FIELD

The present application relates to automated control of a vehicle.

### BACKGROUND

A vehicle is an apparatus that is able to move in a desired direction while transporting one or more drivers and/or passengers. A representative example is a car.

Some vehicle include various types of communication functionality, such as the ability to communicate with external devices. Such communication can be implemented, for exmaple, via a long-range or short-range communication protocols.

### SUMMARY

As such, techniques disclosed herein may enable a vehicle to be electrically connected with a wearable device to provide electric energy to the wearable device, and to be connected to a network through the wearable device.

All or part of the features described throughout this application can be implemented as a computer program product including instructions that are stored on one or more non-transitory machine-readable storage media, and that are executable on one or more processing devices. All or part of the features described throughout this application can be implemented as an apparatus, method, or electronic system that can include one or more processing devices and memory to store executable instructions to implement the stated functions.

The details of one or more implementations are set forth in the accompanying drawings and the description below. Other features will be apparent from the description and drawings, and from the claims. The description and specific examples below are given by way of illustration only, and various changes and modifications will be apparent.

### BRIEF DESCRIPTION OF THE DRAWINGS

FIG. 1 is a diagram illustrating an example of a vehicle;
FIG. 2 is a diagram illustrating an example of a cockpit module included in a vehicle;
FIG. 3 is a block diagram of an example of a vehicle;
FIGS. 4A and 4B are diagrams illustrating examples of wearable devices;
FIG. 5 is a block diagram of an example of a wearable device;
FIG. 6 is a flowchart of an exmaple of operations of a vehicle and a wearable device;
FIG. 7 is a flowchart of an example of operations of a vehicle and a wearable device;
FIGS. 8 to 14 are diagrams illustrating examples of an operation of a vehicle that is electrically connected to a wearable device;
FIG. 15 is a diagram of an example of an operation of the vehicle performing identification of a passenger of the vehicle;
FIG. 16 is a diagram of an example of an operation of a vehicle in which a user does not wear a wearable device; and
FIGS. 17 to 20 are diagrams of examples of an operation of a vehicle in which a passenger of the vehicle possesses both a wearable device and a mobile terminal.

### DETAILED DESCRIPTION

Techniques are disclosed that enable a vehicle to be electrically connected with an external device, such as a wearable device, to provide electric energy to the external device, and to be connected to a network through the external device.

The communication may be implemented using any suitable communication mechanism, such as a communication network, and/or short range communication, between a vehicle and an external device. In such cases, problems may arise when a communication module for a network connection is not provided in a vehicle, thus rendering it difficult to establish communication using a network. Technique disclosed herein enable a vehicle to provide electric energy to a connected wearable device, and connected with a network via the wearable device.

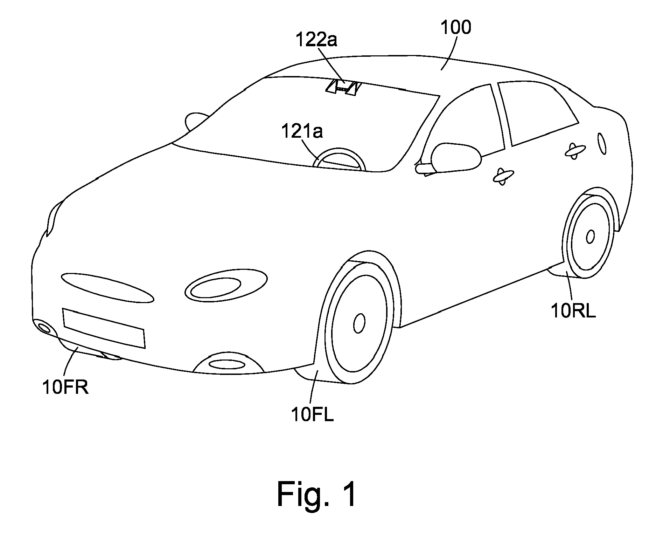

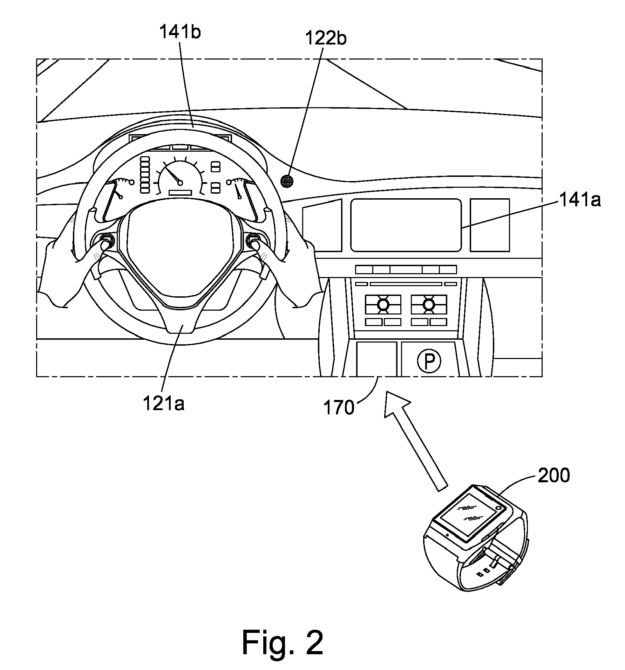

FIG. 1 is a diagram illustrating an example of a vehicle, and FIG. 2 is a diagram illustrating an example of a cockpit module included in the vehicle.

Referring to the examples in FIGS. 1 and 2, a vehicle 100 may include wheels 10FR, 10FL, 10RL, ... rotated by a power source, a steering input means 121a for adjusting a movement direction of the vehicle 100, a camera 122a for photographing an image at a front side of the vehicle, and various electronic units included inside the vehicle 100.

Further, the vehicle 100 may include a camera 122b for photographing an image inside the vehicle, a first display unit 141a and a second display unit 141b for visually displaying various information, and an interface unit 170 electrically connected with a wearable device 200.

The interface unit 170 may include a holding part formed so that the wearable device 200 may be held, and a connection part connected with the wearable device 200.

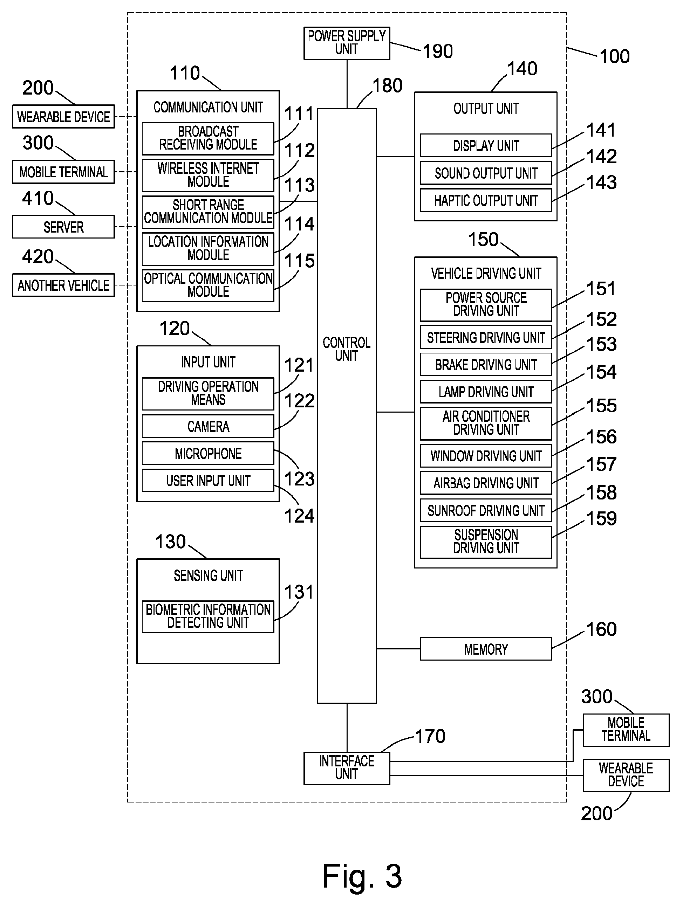

FIG. 3 is a block diagram of an example of a vehicle.

Referring to the example of FIG. 3, the vehicle 100 may include a communication unit 110, an input unit 120, a sensing unit 130, an output unit 140, a vehicle driving unit 150, a memory 160, an interface unit 170, a control unit 180, and a power supply unit 190.

The communication unit 110 may include one or more modules capable of establishing wireless communication between the vehicle 100 and the wearable device 200, the vehicle 100 and a mobile terminal 300, the vehicle 100 and an external server 410, or the vehicle 100 and another vehicle 420. Further, the communication unit 110 may include one or more modules connecting the vehicle 100 to one or more networks.

The communication unit 110 may include a broadcast receiving module 111, a wireless Internet module 112, a short range communication module 113, a location information module 114, and an optical communication module 115.

The broadcast receiving module 111 receives a broadcast signal or broadcast-related information from an external broadcast management server through a broadcast channel. Here, the broadcast include radio broadcast or TV broadcast.

The wireless Internet module 112 refers to a module for wireless Internet connection, and may be contained inside or outside the vehicle 100. The wireless Internet module 112 is configured to transceive a wireless signal in a communication network according to wireless Internet technologies.

Examples of the wireless Internet technology include a wireless LAN (WLAN), wireless-fidelity (Wi-Fi), Wi-Fi direct, digital living network alliance (DLNA), wireless broadband (WiBro), world interoperability for microwave access (WiMAX), high speed downlink packet access (HSDPA), high speed uplink packet access (HSUPA), long term evolution (LTE), and long term evolution advanced (LTE-A), and the wireless Internet module 112 transceives data according to one or more wireless Internet technologies within a range including even non-listed Internet technologies.

The short range communication module 113 is used for short range communication, and may support short range communication by using at least one of Bluetooth^{™}, radio frequency identification (RFID), infrared data association (IrDA), ultra wideband (UWB), ZigBee, near field communication (NFC), Wi-Fi, Wi-Fi Direct, and wireless universal serial bus (wireless USB) technologies.

The short range communication module 113 may perform short range communication between the vehicle 100 and one or more external devices by forming a short range wireless communication network.

The location information module 114 refers to a module for obtaining a location of the vehicle 100, and a representative example includes a global positioning system (GPS) module. For example, when a mobile terminal utilizes a GPS module, it is possible to obtain a location of the mobile terminal by using a signal transmitted from a GPS satellite.

The optical communication module 115 may include an optical transmitting unit and an optical receiving unit.

The optical receiving unit may convert an optical signal into an electric signal and receive information. The optical receiving unit may include a photo diode (PD) for receiving light. The photo diode may convert light into an electric signal. For example, the optical receiving unit may receive information about a front vehicle through light emitted from a light source included in the front vehicle.

The optical transmitting unit may include one or more light emitting devices for converting an electric signal into an optical signal. Here, the light emitting device may be a light emitting diode (LED). The optical transmitting unit converts an electric signal into an optical signal and transmits the converted optical signal to the outside. For example, the optical transmitting unit may emit an optical signal to the outside by flickering a light emitting device corresponding to a predetermined frequency. According to some implementations, the optical transmitting unit may include a plurality of light emitting device arrays. The optical transmitting unit may, in some cases, be integrated with a lamp included in the vehicle 100. For example, the optical transmitting unit may be at least one of a headlight, a taillight, a stop lamp, a turnsignal lamp, and a sidelight.

The input unit 120 may include a driving operation means 121, a camera 122, a microphone 123, and a user input unit 124.

The driving operation means 121 receives a user input for driving the vehicle 100. The driving operation means 121 may include a steering input means 121a, a shift input means 121b, an acceleration input means 121c, and a brake input means 121d.

The steering input means 121a receives an input of a movement direction of the vehicle 100 from a user. The steering input means 121a may be formed in a wheel type so that steering may be input by a rotation thereof, but is not necessarily limited to such configurations. According to some implementations, the steering input means 121a may also be formed in a form of a touch screen, a touch pad, or a button, or any suitable input mechanism.

The shift input means 121b receives an input of park P, drive D, neutral N, and reverse R of the vehicle 100 from a user. The shift input means 121b may be formed in a lever type, but is not necessarily limited thereto. According to some implementations, the shift input means 121b may also be formed in a form of a touch screen, a touch pad, or a button, or any suitable input mechanism.

The acceleration input means 121c receives an input for acceleration of the vehicle 100 from a user. The brake input means 121d receives an input for deceleration of the vehicle 100 from the user. The acceleration input means 121c and the brake input means 121d may be formed in a pedal form, but is not necessarily limited thereto. According to some implementations, the acceleration input means 121c or the brake input means 121d may also be formed in a form of a touch screen, a touch pad, or a button, or any suitable input mechanism.

The camera 122 may include an image sensor and an image processing module. The camera 122 may process a still image or a moving image obtained by the image sensor (for example, a complementary metal-oxide semiconductor (CMOS) or a charge-coupled device (CCD)). The image processing module may process a still image or a moving image obtained through the image sensor, extract necessary information, and transmit the extracted information to the control unit 180. In the meantime, the vehicle 100 may include the first camera 122a for photographing an image of a front side of the vehicle and a second camera 122b for photographing an image inside the vehicle.

The first camera 122a may be formed of a stereo camera to obtain a stereo image of the front side of the vehicle. In this case, the image processing module may provide information on a distance to an object detected from the stereo image through binocular parallax information.

The second camera 122b may obtain an image of a passenger. The second camera 122b may obtain an image for biometrics of a passenger.

The microphone 123 may process an external sound signal to electrical data. The processed data may be variously utilized according to a function currently performed by the vehicle 100. The microphone 123 may convert a sound command of a user into electrical data. The converted electrical data may be transmitted to the control unit 180.

In some implementations, the camera 122 or the microphone 123 may also be a constituent element included in the sensing unit 130, not the constituent element included in the input unit 120.

The user input unit 124 is used for receiving an input of information from a user. When the information is input through the user input unit 124, the control unit 180 may control an operation of the vehicle 100 so as to correspond to the input information. The user input unit 124 may include a touch-type input means or a mechanical input means.

The sensing unit 130 senses a signal related to travelling and the like of the vehicle 100. To this end, the sensing unit 130 may include a collision sensor, a wheel sensor, a speed sensor, an inclination sensor, a weight detection sensor, a heading sensor, a yaw sensor, a gyro sensor, a position module, a vehicle drive/reverse sensor, a battery sensor, a fuel sensor, a tire sensor, a steering wheel rotation-based steering sensor, a vehicle-inside temperature sensor, a vehicle-inside humidity sensor, an ultrasonic sensor, a radar, a lidar, and the like.

Accordingly, the sensing unit 130 may obtain a sensing signal for vehicle collision information, vehicle direction information, vehicle positioning information (GPS information), vehicle angle information, vehicle speed information, vehicle acceleration information, vehicle inclination information, vehicle drive/reverse information, battery information, fuel information, tire information, vehicle lamp information, vehicle-inside temperature information, vehicle-inside humidity information, and the like.

In some implementations, the sensing unit 130 may further include an acceleration pedal sensor, a pressure sensor, an engine speed sensor, an air flow sensor (AFS), an air temperature sensor (ATS), a water temperature sensor (WTS), a throttle position sensor (TPS), a thermal diffusion coefficient (TDC) sensor, a crank angle sensor (CAS), and the like.

The sensing unit 130 may include a biometric information detecting unit 131. The biometric information detecting unit 131 detects and obtains biometric information about a passenger. The biometric information may include fingerprint scan information, iris scan information, retina scan information, hand geometry information, facial recognition information, and/or voice recognition information. The biometric information detecting unit 131 may include a sensor for sensing biometric information about a passenger. Here, the camera 122 and the microphone 123 may be operated as sensors. The biometric information detecting unit 131 may obtain hand geometry information and facial recognition information through the second camera 122b. The biometric information detecting unit 131 may obtain voice recognition information through the microphone 123.

In some implementations, the biometric information detecting unit 131 may further include a fingerprint scanner, an iris scanner, or a retina scanner for obtaining fingerprint scan information, iris scan information, or retina scan information about a passenger.

The output unit 140 is used for outputting information processed by the control unit 180, and may include a display unit 141, a sound output unit 142, and a haptic output unit 143.

The display unit 141 may display information processed by the control unit 180. For example, the display unit 141 may display vehicle-related information. Here, the vehicle-related information may include vehicle control information for directly controlling the vehicle, or vehicle driving assistant information for guiding a driver of the vehicle to drive.

The display unit 141 may include at least one of a liquid crystal display (LCD), a thin film transistor-liquid crystal display (TFT LCD), an organic light-emitting diode (OLED) display, a flexible display, a 3D display and an e-ink display.

The display unit 141 may be formed in a mutual layer structure with a touch sensor or integrally formed with a touch sensor to implement a touch screen. The touch screen may serve as a user input unit 148 for providing an input interface between the vehicle 100 and a user, and provide an output interface between the vehicle 100 and the user. In this case, the display unit 141 may include a touch sensor for detecting a touch for the display unit 141 so as to receive a control command by a touch method. When a touch for the display unit 141 is generated by using the touch screen, the touch sensor detects the touch, and the control unit 180 may generate a control command corresponding to the touch based on the detected touch. Contents input by the touch method may be characters or numbers, an instruction in various modes, or a designable menu item.

In some cases, two or more display units 141 may exist. For example, the first display unit 141a may be formed in a cluster form, so that a driver may simultaneously drive and check information. The second display 141b may be provided in a predetermined area of a center fascia to be operated as an audio video navigation (AVN) device.

In some implementations, the display unit 141 may be implemented in a head up display (HUD). When the display unit 141 is implemented of an HUD, the display unit 141 may output information through a transparent display provided in the wind shield. As another example, the display unit 141 may include a projection module and output information through an image projected onto a wind shield.

The sound output unit 142 converts an electric signal from the control unit 180 into an audio signal and outputs the converted audio signal. To this end, the sound output unit 142 may include a speaker and the like. The sound output unit 142 may output a sound corresponding to an operation of the user input unit 124.

The haptic output unit 143 generates a tactile output. For example, the haptic output unit 143 may be operated so as to vibrate a steering wheel, a seat belt, and a seat, and enable a user to recognize an output.

The vehicle driving unit 150 may control operations of various devices of the vehicle. The vehicle driving unit 150 may include a power source driving unit 151, a steering driving unit 152, a brake driving unit 153, a lamp driving unit 154, an air conditioner driving unit 155, a window driving unit 156, an airbag driving unit 157, a sunroof driving unit 158, and a suspension driving unit 159.

The power source driving unit 151 may electrically control a power source within the vehicle 100.

For example, when an engine (not illustrated) based on fossil fuel is a power source, the power source driving unit 151 may electrically control the engine. Accordingly, it is possible to control an output torque and the like of the engine. When the power source driving unit 151 is an engine, it is possible to limit a speed of the vehicle by limiting an output torque of the engine under the control of the control unit 180.

As another example, when an electricity-based motor (not illustrated) is a power source, the power source driving unit 151 may control the motor. Accordingly, it may be possible to control a rotation speed, a torque, and the like of the motor.

The steering driving unit 152 may electrically control a steering apparatus within the vehicle 100. Accordingly, it may be possible to change a movement direction of the vehicle.

The brake driving unit 153 may electrically control a brake apparatus (not illustrated) within the vehicle 100. For example, it may be possible to decrease a speed of the vehicle 100 by controlling an operation of a brake disposed in the wheel. As another example, it may be possible to adjust a movement direction of the vehicle 100 to a left direction or a right direction by differentiating operations of the brakes disposed at the left wheel and the right wheel, respectively.

The lamp driving unit 154 may control turn-on/turn-off of the lamps disposed inside and outside of the vehicle. Further, the lamp driving unit 154 may control intensity, a direction, and the like of light of the lamp. For example, the lamp driving unit 154 may control the turnsignal lamp, the stop lamp, and the like.

The air conditioner driving unit 155 may electrically control an air conditioner (not illustrated) within the vehicle 100. For example, when a temperature inside the vehicle is high, the air conditioner driving unit 155 may control the air conditioner to be operated so that cold air is provided inside the vehicle.

The window driving unit 156 may electrically control a window apparatus within the vehicle 100. For example, the window driving unit 156 may control opening or closing of left and right windows on lateral surfaces of the vehicle.

The airbag driving unit 157 may electrically control an airbag apparatus within the vehicle 100. For example, the airbag driving unit 157 may control so that an airbag is exploded in a danger situation.

The sunroof driving unit 158 may electrically control a sunroof apparatus (not illustrated) within the vehicle 100. For example, the sunroof driving unit 158 may control opening or closing of the sunroof apparatus.

The suspension driving unit 159 may electrically control a suspension apparatus (not illustrated) within the vehicle 100. For example, when a road surface has a curve, the suspension driving unit 159 may control vibration of the vehicle 100 to be decreased by controlling the suspension apparatus.

The memory 160 is electrically connected with the control unit 180. The memory 160 may store basic data for a unit, control data for controlling an operation of a unit, and input/output data. The memory 160 may be various hardware storage devices, such as a ROM, a RAM, an EPROM, a flash drive, and a hard drive.

The memory 160 may be matched with one or more wearable devices and store biometric information about a user of the wearable device. For example, the memory 160 may store fingerprint scan information, iris scan information, retina scan information, hand geometry information, facial recognition information, and voice recognition information about a user matched with the first wearable device.

The interface unit 170 may serve as a passage for various kinds of external devices connected to the vehicle 100. For example, the interface unit 170 may include a port connectable with the wearable device 200 or the mobile terminal 300, and be connected with the wearable device 200 or the mobile terminal 300 through the port. In this case, the interface unit 170 may exchange data with the wearable device 200 or the mobile terminal 300.

In some implementations, the interface unit 170 may serve as a passage for supplying electric energy to the connected wearable device 200 or mobile terminal 300. When the wearable device 200 or the mobile terminal 300 is electrically connected to the interface unit 170, the interface unit 170 provides electric energy supplied from the power supply unit 190 to the wearable device 200 or the mobile terminal 300 under the control of the control unit 180.

The control unit 180 may control a general operation of each unit within the vehicle 100. The control unit 180 may be called an engine control unit (ECU).

The control unit 180 may be implemented in a hardware type by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and/or other electrical units for executing functions.

The power supply unit 190 may supply power necessary for operations of respective constituent elements under the control of the control unit 180. For example, the power supply unit 190 may receive power from a battery (not illustrated) inside the vehicle.

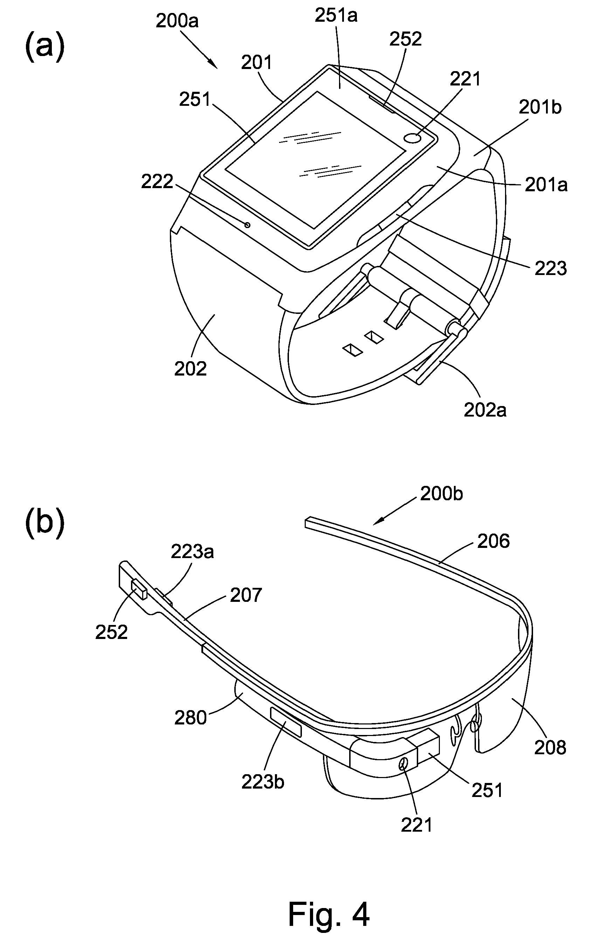

FIGS. 4A and 4B are diagrams illustrating examples of wearable devices.

In the example of FIG. 4, the wearable device 200 is described based on a watch-type (FIG. 4A) and a glasses-type (FIG. 4B), but the present disclosure is not limited thereto.

The watch-type wearable device 200a may be a concept including a band-type wearable device wearable on a wrist of a user without separately including a display. Further, the glasses-type wearable device 200b may be a concept including a head mounted display (HMD).

The wearable device 200 may include a necklace type wearable device wearable on a neck of a user, an earphone type wearable device wearable in an ear of a user, and a ring type wearable device wearable on a finger of a user.

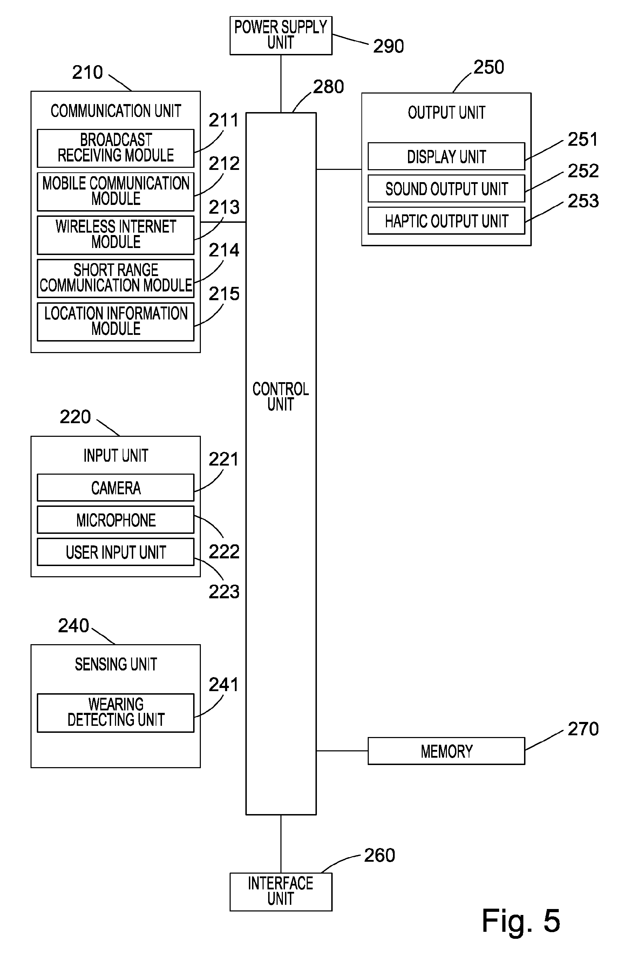

The wearable device 200 may include a mobile communication module 212 (see FIG. 5) and be configured to connect with a mobile communication network through the mobile communication module 212 (see FIG. 5).

Further, the wearable device 200 may be configured to mutually exchange (or link) data with another mobile terminal 300. In this case, a user may use data processed by the mobile terminal 300 through the wearable device. For example, when a call is received in the mobile terminal 300, a user may take a phone call through the wearable device 200, or when a message is received in the mobile terminal 300, the user may check the received message through the wearable device 200.

FIG. 4A is a perspective view illustrating an example of a watch-type wearable device (e.g., watch-type device 200a).

Referring to the example in FIG. 4A, the watch-type wearable device 200a includes a main body 201 including a display unit 251, and a band 202 connected to the main body 201 to be wearable on a wrist.

The main body 201 includes a case forming an appearance. As illustrated in FIG. 4A, the case may include a first case 201a and a second case 201b providing internal spaces for accommodating various electronic components. However, the present disclosure is not limited thereto, and in some implementations, the case is configured to provide the internal space, so that the unibody wearable device 200 may also be implemented.

The watch-type wearable device 200a may be configured to perform wireless communication, and an antenna for the wireless communication may be installed in the main body 201. In some implementations, the antenna may expand performance thereof by using the case. For example, the case including a conductive material is electrically connected with the antenna to be configured to expand a ground field or a radiated field.

The display unit 251 may be disposed on a front surface of the main body 201 to output information, and a touch sensor may be provided in the display unit 251 to be implemented as a touch screen. As illustrated in the example of FIG. 4A, a window 251a of the display unit 251 may be mounted in the first case 201a to be formed on a front surface of the body of the terminal together with the first case 201a.

The main body 201 may include a sound output unit 252, a camera 221, a microphone 222, a user input unit 223, and the like. When the display unit 251 is implemented as a touch screen, the display unit 251 may serve as the user input unit 223, and thus, a separate key may not be provided in the main body 201.

The band 202 may be formed to be wearable on a wrist and surround the wrist, and be formed of a flexible material for wearing easiness. For example, the band 202 may be formed of leather, rubber, silicon, a synthetic resin, and the like. Further, the band 202 is detachably formed in the main body 201, so that a user may replace various types of bands according to his/her taste.

In some implementations, the band 202 may be used to expand performance of the antenna. For example, a ground expansion unit (not illustrated), which is electrically connected with the antenna to expand a ground field, may be embedded in the band.

The band 202 may be provided with a fastener 202a. The fastener 202a may be implemented by a buckle, a hook structure enabling snap-fit, or Velcro^{™}, and include an elastic section or material. FIG. 4A illustrates an example in which the fastener 202a is implemented in a buckle type.

FIG. 4B is a perspective view illustrating an example of a glasses-type wearable device (e.g., glasses-type device 200b).

Referring to the example of FIG. 4B, the glasses-type wearable device 200b may be configured to be wearable on a head of a human body, and include a frame unit (a case, a housing, and the like) for the wearing. The frame unit may be formed of a flexible material for easy wearing. FIG. 4B illustrates an example in which the frame unit includes a first frame 206 and a second frame 207 having different materials.

The frame units 206 and 207 are supported by the head, and provide spaces for mounting various components. As illustrated in FIG. 4B, an electronic component, such as a control unit 280 and a sound output module 142 may be mounted in the frame units 206 and 207. Further, a lens 208 covering at least one of a left eye and a right eye may be detachably mounted in the frame unit.

The control unit 280 controls various electronic components included in the wearable device 200b. FIG. 4B illustrates an example in which the control unit 280 is installed in the frame unit at one side of the head. However, a location of the control unit 280 is not limited thereto.

The display unit 251 may be implemented in a form of a head mounted display (HMD). The HMD form refers to a display method, in which a display is mounted on a head to directly display an image in front of the eyes of a user. When a user wears the glasses-type wearable device 200b, the display unit 251 may be disposed so as to correspond to at least one of a left eye and a right eye so as to directly provide an image to the front side of the eyes of the user. FIG. 4B illustrates an example in which the display unit 251 is located at a part corresponding to the right eye so as to output an image toward the right eye of the user.

The display unit 251 may project an image onto the eyes of the user by using a prism. Further, the prism may be light-transmissively formed so as to enable a user to view the projected image and a general view at a front side (a range viewed through the eyes of the user) together.

Accordingly, the image output through the display unit 251 may be displayed while overlapping a general view. The wearable device 200b may provide augmented reality (AR), in which a real image or background overlaps a virtual image, so that one image is displayed by using the characteristic of the display.

The camera 221 is disposed to be adjacent to at least one of the left eye and the right eye to photograph an image at a front side. The camera 221 is located to be adjacent to the eyes, so that the camera 221 may obtain a scene viewed by a user as an image.

The camera 221 may also be installed in the frame unit, and a plurality of cameras 221 may be provided to obtain a 3D image.

The glasses-type wearable device 200b may include user input units 223a and 223b manipulated so as to receive a control command. As long as a manner is a tactile manner performing a manipulation while detecting a tactile feeling, such as a touch or a push, of a user, the user input units 223a and 223b may adopt any type. FIG. 4B illustrates an example in which the user input unit 223a by the push input manner and the user input unit 223b by the touch input manner are provided in the frame unit and the control unit 280, respectively.

Further, the glasses-type wearable device 220b may include a microphone (not illustrated) for receiving a sound and processing the received sound into electrical voice data, and a sound output module 252 for outputting a sound. The sound output module 252 may be configured to transmit a sound by a general sound output manner or a bone conduction manner. In a case where the sound output module 252 is implemented by the bone conduction manner, when a user wears the wearable device 200b, the sound output module 252 is in close contact with a head, and vibrates a skull and transmits a sound.

FIG. 5 is a block diagram of an example of a wearable device.

In the example of FIG. 5, the wearable device 200 may include a wireless communication unit 210, an input unit 220, a sensing unit 240, an output unit 250, an interface unit 260, a memory 270, a control unit 280, a power supply unit 290, and the like.

For example, the wireless communication unit 210 among the constituent elements may include one or more modules capable of establishing wireless communication between the wearable device 200 and a wireless communication system, between the wearable device 200 and another device (for example, a mobile terminal or a wearable device), or the wearable device 200 and an external server. Further, the wireless communication unit 210 may include one or more modules for connecting the wearable device 200 to one or more networks.

The wireless communication unit 210 may include one or more of a broadcast receiving module 211, a mobile communication module 212, a wireless Internet module 213, a short range communication module 214, or a location information module 215.

The broadcast receiving module 211 receives a broadcast signal and/or broadcast related information from an external broadcast management server through a broadcast channel. The broadcast channel may include a satellite channel and a terrestrial channel.

The mobile communication module 212 transceives a wireless signal with at least one of a base station, an external terminal, and a server on a mobile communication network established according to technical standards or a communication manner for mobile communication (for example, global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), long term evolution (LTE), and long term evolution-advanced (LTE-A)).

The wireless signal may include various types of data according to transception of a voice call signal, a video call signal, or a character/multimedia message.

The wireless Internet module 213 refers to a module for wireless Internet connection, and may be mounted inside or outside the wearable device 200. The wireless Internet module 213 is configured to transceive a wireless signal on a communication network according to suitable wireless Internet technologies.

Examples of the wireless Internet technology include a wireless LAN (WLAN), wireless-fidelity (Wi-Fi), Wi-Fi direct, digital living network alliance (DLNA), wireless broadband (WiBro), world interoperability for microwave access (WiMAX), high speed downlink packet access (HSDPA), high speed uplink packet access (HSUPA), long term evolution (LTE), and long term evolution advanced (LTE-A), and the wireless Internet module 213 transceives data according to one or more wireless Internet technologies within a range including any suitable Internet technologies that are not listed here.

From the point of view that the wireless Internet connection by WiBro, HSDPA, HSUPA, GSM, CDMA, WCDMA, LTE, LTE-A, and the like are established through a mobile communication network, the wireless Internet module 213 may, in some implementations, perform wireless Internet connection through the mobile communication network and therefore function as mobile communication module 212.

The short range communication module 214 is used for short range communication, and may support short range communication by using at least one of Bluetooth^{™}, radio frequency identification (RFID), infrared data association (IrDA), ultra wideband (UWB), ZigBee, near field communication (NFC), Wi-Fi, Wi-Fi Direct, and/or wireless universal serial bus (wireless USB) technologies. The short range communication module 214 may support wireless communication between the wearable device 200 and a wireless communication system, between the wearable device 200 and another wearable device 200, or the wearable device 200 and a network on which another wearable device 200 (or an external server) is located, through a short range wireless communication network (wireless area network). The short range wireless communication network may be a short range wireless personal network (e.g., a wireless personal area network).

The location information module 215 is a module used for obtaining a location (or a current location) of the wearable device, and a representative example thereof includes a GPS module or a Wi-Fi module. For example, when the wearable device utilizes a GPS module, it is possible to obtain a location of the wearable device by using a signal transmitted by a GPS satellite. As another example, when the wearable device utilizes a Wi-Fi module, it is possible to obtain a location of the wearable device based on information about a wireless Access Point (AP) transmitting or receiving a wireless signal with the Wi-Fi module. Alternately or additionally, the location information module 215 may perform a specific function of another module of the wireless communication unit 210 in order to obtain data on a location of the wearable device as necessary. The location information module 215 is a module used for obtaining a location (or a current location) of the wearable device, and is not limited to a module which directly calculates or obtains a location of the wearable device.

The input unit 220 may include a camera 221 or an image input unit for inputting an image signal, a microphone 222 or an audio input unit for inputting an audio signal, and a user input unit 223 (for example, a touch key and a push key (mechanical key)) for receiving an input of information from a user. Voice data or image data collected by the input unit 220 may be analyzed and processed by a control command of the user.

The camera 221 processes an image frame, such as a still image or a moving image, obtained by an image sensor in a video call mode or a photography mode. The processed image frame may be displayed on the display unit 251 or stored in the memory 270. In some implementations, the plurality of cameras 221 provided in the wearable device 200 may be disposed in a matrix structure, and a plurality of elements of image information having various angles and focuses may be input into the wearable device 200 through the cameras 221 having the matrix structure. Further, the plurality of cameras 221 may be disposed in a stereo structure so as to obtain a left image and a right image for implementing a 3D image.

The microphone 222 processes an external sound signal into electrical voice data. The processed voice data may be variously utilized according to a function (or a currently executed application program) performed (e.g., concurrently) by the wearable device 200. In some implementations, various noise removing algorithms for removing a noise generated during a process of receiving an input of an external sound signal may be implemented in the microphone 222.

The user input unit 223 is used for receiving an input of information from the user, and when information is input through the user input unit 223, the control unit 280 may control an operation of the wearable device 200 so as to correspond to the input information. The user input unit 223 may include a mechanical input means (or a mechanical key, for example, a button, a dome switch, a jog wheel, and a jog switch positioned on a front and/or rear surface or a lateral surface of the wearable device 200) and/or a touch-type input means. For example, the touch type input means may be formed of a virtual key, a soft key, or a visual key displayed on a touch screen through software processing, or a touch key disposed at a part other than the touch screen, and the virtual key or the visual key may be displayed on the touch screen with various forms, and formed by, for example, graphic, text, an icon, a video, or a combination thereof.

The sensing unit 240 may include one or more sensors for sensing at least one element of wearable device-inside information, information about a surrounding environment surrounding the wearable device, and user information. For example, the sensing unit 240 may include at least one of a wearing detecting unit 241, a proximity sensor, an illumination sensor, a touch sensor, an acceleration sensor, a magnetic sensor, a gravity-sensor (G-sensor), a gyroscope sensor, a motion sensor, an RGB sensor, an infrared sensor (IR sensor), a finger scan sensor, an ultrasonic sensor, an optical sensor (for example, see the camera 221), a microphone (see the microphone 222), a battery gauge, an environment sensor (for example, a barometer, a hygrometer, a thermometer, a radioactivity detecting sensor, a thermal detecting sensor, and a gas detecting sensor), and a chemical sensor (for example, an electronic nose, a healthcare sensor, and a biometric sensor). In some implementations, the wearable device may combine information sensed by two or more sensors among the sensors and utilize the combined information.

The control unit 280 may control driving or an operation of the wearable device 200 based on the sensing signal, or perform data processing, a function, or an operation related to an application program installed in the wearable device 200.

Hereinafter, representative sensors among the various sensors includable in the sensing unit 240 will be described in more detail.

The wearing detecting unit 241 may detect whether the user of the wearable device 200 is wearing the wearable device 200. The wearing detecting unit 241 may detect whether the user is wearing the wearable device 200 by using any one of the proximity sensor, the illumination sensor, the touch sensor, the motion sensor, the IR sensor, and the ultrasonic sensor.

The proximity sensor refers to a sensor for detecting whether an object approaching a predetermined detection surface or an object existing at the vicinity exists by using force of an electromagnetic field or infrared rays without a mechanical contact. The proximity sensor may be disposed in an internal area of the wearable device surrounded by the aforementioned touch screen or around the touch screen.

Examples of the proximity sensor include a transmissive optical electric sensor, a direct reflective optical electric sensor, a mirror reflective optical electric sensor, a high-frequency oscillation-type proximity sensor, a capacitive proximity sensor, a magnetic proximity sensor, and an IR proximity sensor. When the touch screen is a capacitive type, the proximity sensor may be configured to detect approach of an object based on a change in an electric field according to approach of a conductive object. In this case, the touch screen (or the touch sensor) itself may be divided into the proximity sensor.

For convenience of description, an action in which an object approaches the touch screen while not being in contact with the touch screen, so that the object is recognized to be located on the touch screen, is referred to as "a proximity touch," and an action in which an object is actually in contact with the touch screen is referred to as "a contact touch." The position at which the object is proximity-touched on the touch screen refers to a position at which the object vertically corresponds to the touch screen when the object is proximity-touched. The proximity sensor may detect a proximity touch and a proximity touch pattern (for example, a proximity touch distance, a proximity touch direction, a proximity touch speed, a proximity touch time, a proximity touch position, or a proximity touch movement state). In some implementations, the control unit 280 may process data (or information) corresponding to the proximity touch operation and the proximity touch pattern detected by the proximity sensor, and further, output visual information corresponding to processed data on the touch screen. Further, the control unit 280 may control the wearable device 200 so that different operations or data (or information) are processed according to whether the touch at the same point on the touch screen is a proximity touch or a contact touch.

The touch sensor detects a touch (or a touch input) applied to the touch screen (or the display unit 251) by using at least one of various touch methods, such as a resistive method, a capacitive method, an IR method, an ultrasonic method, and/or a magnetic method.

As an example, the touch sensor may be configured to convert a change in a pressure applied to a specific region of the touch screen, a capacitance and the like generated at a specific region, or the like into an electrical input signal. The touch sensor may be configured to detect a position and an area, in which a touch object applying a touch onto the touch screen is touched, on the touch sensor, a pressure during the touch, capacitance during the touch, and the like. Here, the touch object is an object applying a touch to the touch sensor, for example, a finger, a touch pen, a stylus pen, and a pointer.

As described above, when a touch input is generated in the touch sensor, a signal(s) corresponding to the touch input is transmitted to a touch controller. The touch controller processes the signal(s), and then transmits corresponding data to the control unit 280. Accordingly, the control unit 280 may recognize a region of the display unit 251, in which the touch is made. Here, the touch controller may be a separate constituent element from the control unit 280, or be the control unit 280 itself.

In some implementations, the control unit 280 may perform different controls or the same control according to the kinds of touch objects touching the touch screen (or a touch key provided other than the touch screen). Whether to perform different controls or the same control according to the kinds of touch objects may be determined according to a current operation state of the wearable device 200 or a currently executed application program.

The touch sensor and the proximity sensor, which have been described above, may sense various kinds of touches, such as a short (or tap) touch, a long touch, a multi-touch, a drag touch, a flick touch, a pinch-in touch, a pinch-out touch, a swype touch, and/or a hovering touch, to the touch screen independently or in combination.

The ultrasonic sensor may recognize location information about a detection target by using ultrasonic waves. In some implementations, the control unit 280 may calculate a location of a wave generating source based on information sensed by the optical sensor and the plurality of ultrasonic sensors. The position of the wave generating source may be calculated by using a property that light is much faster than ultrasonic waves, that is, a time, for which light reaches the optical sensor, is much shorter than a time, for which ultrasonic waves reach the ultrasonic sensor. For example, it may be possible to calculate the position of the wave generating source by using a difference in reaching time between light as a reference signal and ultrasonic waves.

In some implementations, the camera 221, which has been described as the constituent element of the input unit 220, includes at least one of a camera sensor (for example, a CCD and a CMOS), a photo sensor (or an image sensor), and a laser sensor.

The camera 221 and the laser sensor may be combined with each other to detect a touch of a detection target to a 3D image. The photo sensor may be stacked on the display device, and the photo sensor is configured to scan a movement of a detection target approaching the touch screen. More particularly, the photo sensor, in which photo diodes and transistors (TR) are mounted in rows and columns, scans contents put on the photo sensor by using an electric signal changed according to a quantity of light applied to the photo diode. For example, the photo sensor may calculate coordinates of the detection target according to a variation amount of light, and obtain location information about the detection target through the calculated coordinates.

The output unit 250 generates an output related to a sense of sight, a sense of hearing, or a sense of touch, and may include at least one of the display unit 251, the sound output unit 252, a haptic module 253, and an optical output unit 254. The display unit 251 may be formed in a layer structure with the touch sensor or be integrally formed with the touch sensor to implement the touch screen. The touch screen may serve as the user input unit 223 providing an input interface between the wearable device 200 and the user, and provide an output interface between the wearable device 200 and the user.

The display unit 251 may display or otherwise output information processed by the wearable device 200. For example, the display unit 251 may display execution image information about an application program driven by the wearable device 200, or user interface (UI) and graphic user interface (GUI) information according to the execution image information.

Further, the display unit 251 may be configured as a 3D display unit displaying a 3D image.

A 3D display method, such as a stereoscopic method (glasses method), an auto stereoscopic method (glassless method), and a projection method (holographic method, may be applied to the 3D display unit.

The sound output unit 252 may output audio data received from the wireless communication unit 210 in call signal reception mode, a call mode, a recording mode, a voice recognition mode, and a broadcast reception mode, or stored in the memory 270. The sound output unit 252 may also output a sound signal related to a function (for example, a call signal reception sound and a message reception sound) performed by the wearable device 200. The sound output unit 252 may include a receiver, a speaker, a buzzer, and the like.

The haptic module 253 generates various tactile effects felt by the user. A representative example of the tactile effect generated by the haptic module 253 may be a vibration. Intensity, a pattern, and the like of the vibration generated by the haptic module 253 may be controlled by a selection of the user or setting of the control unit. For example, the haptic module 253 may combine different vibrations and output the combined vibrations, or sequentially output different vibrations.

The haptic module 253 may generate various tactile effects, such as an effect by injection force or suction force of air through a pin arrangement vertically moving with respect to a contact skin surface, an injection hole, or a suction hole, brush against a surface of skin, a contact of an electrode, and an effect by stimulation of electromagnetic force, and an effect by reproduction of thermal feedback by using a heat absorbing or heating device, in addition to vibrations.

The haptic module 253 may also be implemented to deliver a tactile effect through a direct contact, and make the user feel a tactile effect through kinesthesia of a finger, an arm, and the like. Two or more haptic modules 253 may be provided according to the configuration of the wearable device 200.

The interface unit 260 serves as a passage for various kinds of external devices connected to the wearable device 200. The interface unit 260 may include at least one of a wire/wireless headset port, an external charger port, a wire/wireless data port, a memory card port, a port for connecting a device provided with an identification module, an audio input/output (I/O) port, a video input/output (I/O) port, and an earphone port. The wearable device 200 may perform an appropriate control related to a connected external device in response to the connection of the external device to the interface unit 260.

In some implementations, the identification module is a chip storing various pieces of information for identifying use authorization of the wearable device 200, and may include a user identity module (UIM), a subscriber identity module (SIM), a universal subscriber identity module (USIM). The device provided with the identification module (hereinafter, the "identification device") may be manufactured by a smart card type. Accordingly, the identification device may be connected with the terminal 200 through the interface unit 260.

Further, the interface unit 260 may be a passage through which power from a cradle is supplied to the wearable device 200, or a passage through which various command signals input from the cradles by the user are transmitted to the wearable device 200 when the wearable device 200 is connected with the external cradle. The various command signals or the power input from the cradle may be operated as signals for recognizing that the wearable device 200 is accurately mounted in the cradle.

The memory 270 stores data supporting various functions of the wearable device 200. The memory 270 may store a plurality of application programs (or applications) driven by the wearable device 200, and data and commands for operating the wearable device 200. At least some of the application programs may be downloaded from an external server through wireless communication. Further, at least some of the application programs may exist in the wearable device 200 from a release time for a basic function (for example, a call receiving and sending function and a message receiving and sending function) of the wearable device 200. In the meantime, the application program may be stored in the memory 270, and installed in the wearable device 200 to be driven to perform the operation (or function) of the wearable device 200 by the control unit 280.

The memory 270 may temporarily store input/output data (for example, a phone book, messages, still images, and moving images). The memory 270 may store data about various patterns of vibration and sound output when a touch is input into the touch screen.

The memory 270 may include at least one type of storage medium among a flash memory type, a hard disk type, a solid state disk (SSD) type, a silicon disk drive (SDD) type, a multimedia card micro type, a card-type memory (for example, an SD or XD memory), a random access memory (RAM), a static random access (SRAM) memory, a read-only memory (ROM), an electrically erasable programmable read-only memory (EEPROM), a programmable read-only memory (PROM), a magnetic memory, a magnetic disk, and/or an optical disk. The wearable device 200 may be operated in association with a web storage which performs a storage function of the memory 270 on the Internet.

The control unit 280 generally controls operations of the wearable device 200, in addition to operations related to the application program. The control unit 280 may provide or process appropriate information or functions to the user by processing a signal, data, information, and the like input or output through the aforementioned constituent elements, or driving an application program stored in the memory 270.

Further, the control unit 280 may control at least some of the constituent elements in order to drive an application program stored in the memory 270. Further, the control unit 280 may combine and operate two or more of the constituent elements included in the wearable device 200 in order to drive the application program.

The power supply unit 290 receives external power and internal power and supplies power to each constituent element included in the wearable device 200 under the control of the control unit 280. The power supply unit 290 includes a battery, and the battery may be an embedded battery or a replaceable battery.

Further, the power supply unit 290 may include a connection port, and the connection port may be configured as one example of the interface 260 electrically connected with an external charger, which supplies power for charging the battery.

As another example, the power supply unit 290 may be configured to charge the battery in a wireless manner without using the connection port. In this case, the power supply unit 290 may receive power from an external wireless power transmitting device by using one or more of an inductive coupling method based on a self-induction effect or a magnetic resonance coupling method based on an electromagnetic resonance effect.

At least some of the constituent elements may be cooperatively operated in order to implement the operation, the control, or the control method of the wearable device according to some implementations which are to be described below. Further, the operation, the control, or the control method of the wearable device may be implemented on the wearable device by driving one or more application programs stored in the memory 270.

In some implementations, techniques may be implemented in a recording medium readable by a computer or a device similar to the computer by using, for example, software, hardware, or a combination thereof.

In some cases, each constituent element of the mobile terminal 300 may be described based on the constituent element of the aforementioned wearable device.

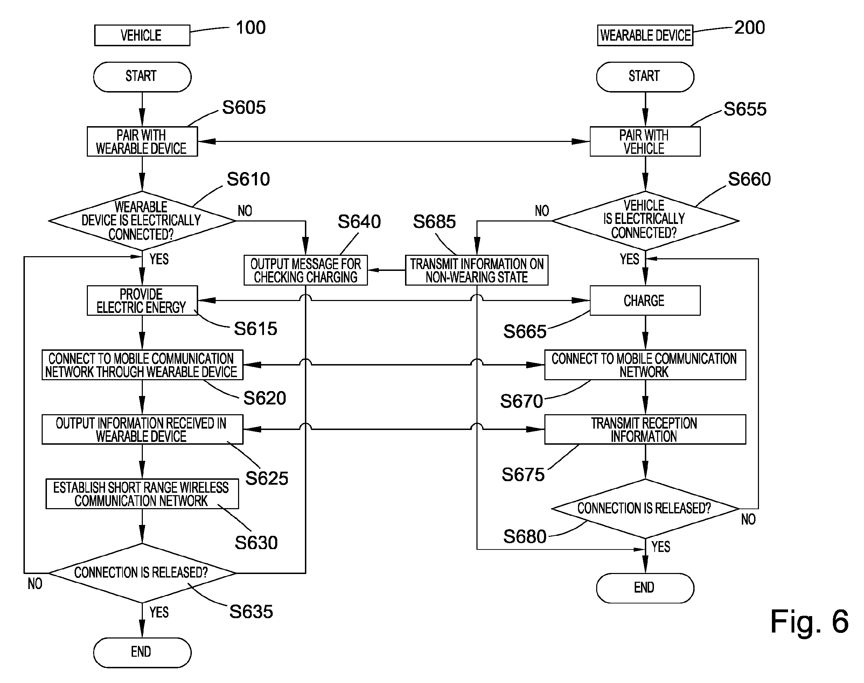

FIG. 6 is a flowchart of an example of operations of a vehicle and a wearable device according to a first implementation.

In the first example implementation of FIG. 6, the wearable device 200 may be linked with the vehicle 100 in a state of not being connected with the mobile terminal 300 (for example, a smart phone).

First, an operation of the vehicle 100 according to the first implementation will be described with reference to FIG. 6.

The control unit 180 of the vehicle 100 performs pairing with the wearable device 200 through the short range communication module 113 (S605).

For example, when a user wearing the previously registered wearable device 200 gets in the vehicle 100, the control unit 180 of the vehicle 100 performs identification on the wearable device 200, and then performs pairing with the wearable device 200 by using a short range communication manner. In this case, the short range communication manner may adopt the Bluetooth manner, but may use at least one of radio frequency identification (RFID), infrared data association (IrDA), ultra wideband (UWB), ZigBee, near field communication (NFC), Wi-Fi, Wi-Fi direct, and/or wireless universal serial bus (wireless USB).

After the pairing with the wearable device 200, the control unit 180 of the vehicle 100 determines whether the control unit 180 of the vehicle 100 is electrically connected with the wearable device 200 (S610). The control unit 180 of the vehicle 100 may determine whether the control unit 180 of the vehicle 100 is electrically connected with the wearable device 200 through the interface unit 170.

When the control unit 180 of the vehicle 100 is electrically connected with the wearable device 200, the control unit of the vehicle 100 provides electric energy to the wearable device 200 through the interface unit 170 (S615). In this case, the electric energy is for charging the wearable device 200.

Then, the control unit 180 of the vehicle 100 is connected to a mobile communication network through the wearable device 200 (S620).

The wearable device 200 may be connected to the mobile communication network through the mobile communication module 212 (see FIG. 5). Here, the mobile communication network is a network using any one mobile communication manner among global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), long term evolution (LTE), and long term evolution-advanced (LTE-A)).

In some implementations, when a communication module for the connection to the mobile communication network is not provided in the vehicle 100, and the vehicle 100 is electrically connected to the wearable device 200, the control unit 180 of the vehicle 100 may be connected to the mobile communication network through the mobile communication module 212 (see FIG. 5) included in the wearable device 200.

In the state of being connected to the mobile communication network, the control unit 180 of the vehicle 100 may output information received in the wearable device 200 (S625). For example, the control unit 180 of the vehicle 100 may receive the information received in the wearable device 200 from the wearable device 200 through the interface unit 170 (see FIG. 3), and output the received information through the output unit 140.

Here, the information received in the wearable device 200 may be call reception information or text/multimedia message reception information received from a device of a counterpart connecting to the mobile communication network.

For example, when a call is received in the wearable device 200 in a state where the control unit 180 of the vehicle 100 is connected to the mobile communication network, the control unit 180 of the vehicle 100 may output call reception information to any one of the display unit 141, the sound output unit 142, and the haptic output unit 143. Then, when a user input for a phone call is received through the input unit 120, the control unit 180 of the vehicle 100 may perform a voice input and output operation by controlling the microphone 123 and the sound output unit 142 so that the user may have a phone call with a counterpart.

As another example, when a text message is received in the wearable device 200 in a state where the control unit 180 of the vehicle 100 is connected to the mobile communication network, the control unit 180 of the vehicle 100 may output the received text message through the display unit 141. As another example, the control unit 180 of the vehicle 100 may text-to-speech (TTS) convert the received text message into speech and output the speech in a form of a voice through the sound output unit 142. Then, the control unit 180 of the vehicle 100 may receive a voice input of a passenger through the microphone 123, speech-to-text (STT) convert the received voice input into text, and transmit the text to a device of a counterpart.

In some implementations, the control unit 180 of the vehicle 100 may receive driving assistance information (for example, navigation information, road information, accident information, and emergency rescue information) or infotainment service (for example, Internet, TV program contents, a movie, and a game) from an external server through the mobile communication network. In this case, the display unit 141 and the sound output unit 142 may function as a telematics device by using the wearable device 200.

The control unit 180 of the vehicle 100 may establish a short range wireless communication network through the short range communication module 113 in the state of being connected to the mobile communication network (S630). Here, the short range wireless communication network may be a network to which a plurality of devices may be connected by using the short range communication manner. Further, the short range wireless communication network may be connected with the mobile communication network. Here, the short range wireless communication network may use the Wi-Fi manner, but may use at least one of Bluetooth^{™}, radio frequency identification (RFID), infrared data association (IrDA), ultra wideband (UWB), ZigBee, near field communication (NFC), Wi-Fi, Wi-Fi direct, and wireless universal serial bus (wireless USB) technologies.

Then, the control unit 180 of the vehicle 100 determines whether the connection with the wearable device 200 is released (S635), and when the connection with the wearable device 200 is not released, performs operations of S615 to S630.

In some implementations, when the user of the wearable device 200 releases a wearing state of the wearable device 200 in a state of getting in the vehicle 100, the control unit 180 of the vehicle 100 may receive information on a non-wearing state. Here, the determination whether the user of the wearable device 200 gets in the vehicle 100 may be performed based on whether the vehicle 100 and the wearable device 200 are connected through the short range wireless communication.

For example, when the wearing detecting unit 241 of the wearable device 200 may detect whether the user wears the wearable device 200, and the control unit 180 of the vehicle 100 may receive information about whether the user wears the wearable device 200.

When the control unit 180 of the vehicle 100 is not electrically connected with the wearable device 200 in the non-wearing state in operation S610, the control unit 180 of the vehicle 100 outputs a message for checking charging through the output unit 140 (S640). The output of the message for checking charging has an effect in that when the wearable device 200 is not connected with the control unit 180 of the vehicle 100 even though the user of the wearable device 200 releases the wearing state for the electrical connection with the vehicle 100, the user may recognize the disconnection.

In some implementations, the control unit 180 of the vehicle 100 may perform identification on a passenger possessing the wearable device 200 before being paired with the wearable device 200 (S605) or being electrically connected with the wearable device 200 (S610).

The biometric information detecting unit 131 (see FIG. 3) may detect biometric information about a passenger. The control unit 180 of the vehicle 100 may be matched with the wearable device and compare first biometric information about a user of the wearable device stored in the memory 160 (see FIG. 3) and second biometric information about the passenger detected through the biometric information detecting unit.

When the first biometric information is matched with the second biometric information, the passenger is identified, and the control unit 180 of the vehicle 100 may be connected with the wearable device 200 through the short range wireless communication (S605) or electrically connected with the wearable device 200 (S610).

When the first biometric information is not matched with the second biometric information, so that the passenger is not identified, the control unit 180 of the vehicle 100 is not connected with the wearable device 200 through the short range wireless communication (S605) and is not electrically connected with the wearable device 200 (S610).

Next, an operation of the wearable device 200 according to the first implementation will be described with reference to FIG. 6.

The control unit 280 of the wearable device 200 performs pairing with the vehicle 100 through the short range communication module 213 (S655).

For example, when a user wearing the wearable device 200 gets in the previously registered vehicle 100, the control unit 280 of the wearable device 200 performs identification on the vehicle 100, and performs pairing with the vehicle 100 by using the short range communication manner. Here, the short range communication network may adopt the Bluetooth^{™} manner, but may use at least one of radio frequency identification (RFID), infrared data association (IrDA), ultra wideband (UWB), ZigBee, near field communication (NFC), Wi-Fi, Wi-Fi direct, and wireless universal serial bus (wireless USB) technologies.

The control unit 280 of the wearable device 200 may determine whether the control unit 280 of the wearable device 200 is electrically connected with the vehicle 100 (S660). For example, the control unit 280 of the wearable device 200 may determine whether the control unit 280 of the wearable device 200 is connected with the vehicle 100 through the interface unit 260.

When the control unit 280 of the wearable device 200 is electrically connected with the vehicle 100, the control unit 280 of the wearable device 200 receives electric energy from the vehicle 100 through the interface unit 260, and is charged by using the received electric energy (S665).

The wearable device 200 is connected to the mobile communication network through the mobile communication module 212 (see FIG. 5) (S670). In the present example, it is described that the control unit 280 of the wearable device 200 is electrically connected with the vehicle 100, and then is connected to the mobile communication network (S670), but the wearable device 200 may always be connected to the mobile communication network in a state where a power supply of the wearable device 200 is turned on.

The control unit 280 of the wearable device 200 receives predetermined information through the mobile communication network in a state of being connected to the mobile communication network, and transmits the received information to the vehicle 100 through the interface unit 260 (see FIG. 5) (S675). Here, the received information may be call reception information or text/multimedia message reception information received from a device of a counterpart connected to the mobile communication network.

Then, the control unit 280 of the wearable device 200 determines whether the connection with the vehicle 100 is released (S680), and when the connection with the vehicle 100 is not released, operations of S665 to S675 are performed.

In some implementations, when the user of the wearable device 200 is in a state of getting in the vehicle 100, and the wearable device 200 is in a non-wearing state and is not electrically connected with the vehicle 100, the control unit 280 of the wearable device 200 may transmit information on a non-wearing state to the vehicle 100 (S685). Here, the determination whether the user of the wearable device 200 gets in the vehicle 100 may be performed based on whether the vehicle 100 and the wearable device 200 are connected through the short range wireless communication. Here, the information on the non-wearing state may be obtained by the wearing detecting unit 241.

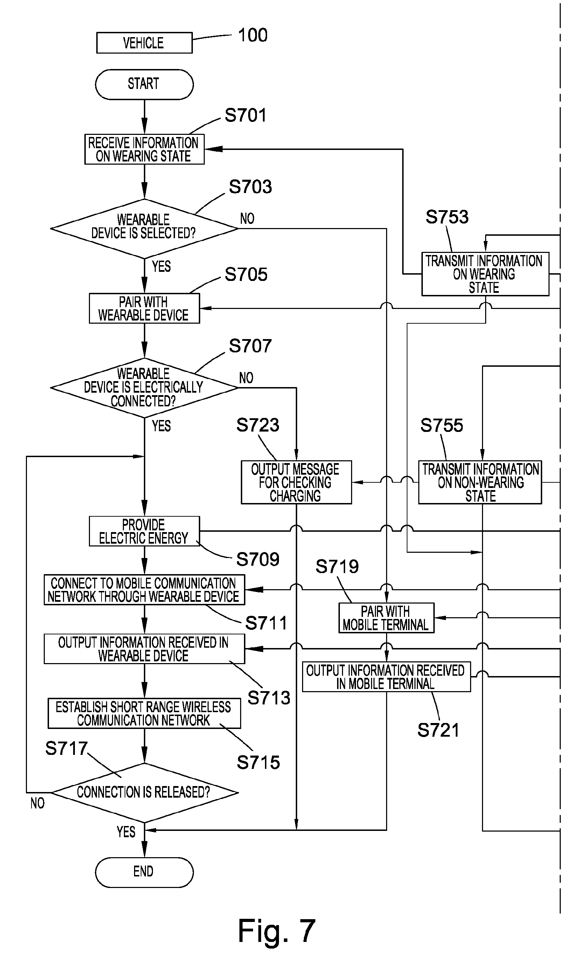

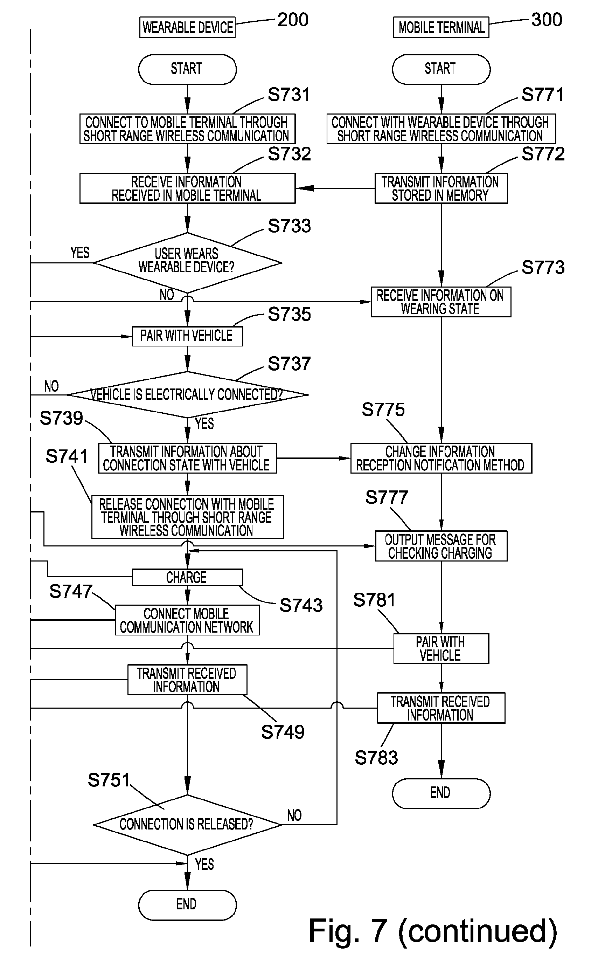

FIG. 7 is a flowchart of an example of operations of a vehicle and a wearable device according to a second implementation.

In the example second implementation of FIG. 7, a user may get in the vehicle 100 in a state where the wearable device 200 is connected with the mobile terminal 300 (for example, a smart phone). Hereinafter, the second implementation will be described according to differences from the first implementation that was illustrated in FIG. 6. Unless specifically mentioned, contents described in the example first implementation of FIG. 6 may also be applied to the second implementation of FIG. 7.

First, an example of an operation of the vehicle 100 according to the second implementation will be described with reference to FIG. 7.

The control unit 180 of the vehicle 100 receives information on a wearing state of the wearable device 200 from the wearable device 200 (S701). For example, when a user wears the wearable device 200, the control unit 180 of the vehicle 100 receives information on a wearing state of the wearable device 200. When the user does not wear the wearable device 200, the control unit 180 of the vehicle 100 receives information on a non-wearing state. Here, information on the wearing state or the non-wearing state may be received in a form of a beacon signal before the vehicle 100 is paired with the wearable device 200.

After the information on the wearing state or the non-wearing state is received, the control unit 180 of the vehicle 100 receives an input for selecting any one of the wearable device 200 and the mobile terminal 300 (S703). For example, the control unit 180 of the vehicle 100 displays a selection input image for selecting one of the wearable device and the mobile terminal to be first paired on the display unit 141, and receives a user input through the selection input image, and selects any one of the wearable device 200 and the mobile terminal 300.

When the wearable device 200 is selected, the control unit 180 of the vehicle 100 performs pairing with the wearable device 200 (S705).

After being paired with the wearable device 200, the control unit 180 of the vehicle 100 determines whether the control unit 180 of the vehicle 100 is electrically connected with the wearable device 200 (S707).

When the control unit 180 of the vehicle 100 is electrically connected with the wearable device 200, the control unit 180 of the vehicle 100 provides electric energy to the wearable device 200 through the interface unit 170 (S709).

Then, the control unit 180 of the vehicle 100 is connected to the mobile communication network through the wearable device 200 (S711).

In the state of being connected to the mobile communication network, the control unit 180 of the vehicle 100 may output information received in the wearable device 200 (S713).

In the state of being connected to the mobile communication network, the control unit 180 of the vehicle 100 may establish a short range wireless communication network through the short range communication module 113 (S715).

Then, the control unit 180 of the vehicle 100 determines whether the connection with the wearable device 200 is released (S717), and when the connection with the wearable device 200 is not released, operations of S709 to S715 are performed.

When the mobile terminal 300 is selected in operation S703, the control unit 180 of the vehicle 100 performs pairing with the mobile terminal 300 (S719).

When the control unit 180 of the vehicle 100 is paired with the mobile terminal 300, the control unit 180 of the vehicle 100 may output information received in the mobile terminal 300 (S721). For example, the control unit 180 of the vehicle 100 may receive the information received in the mobile terminal 300 from the mobile terminal 300 through the interface unit 170 (see FIG. 3), and output the received information through the output unit 140.

Here, the information received in the mobile terminal 300 may be call reception information or text/multimedia message reception information received from a device of a counterpart accessing the mobile communication network.

In some implementations, although not illustrated, similar to the case where the control unit 180 of the vehicle 100 is electrically connected with the wearable device 200, when the control unit 180 of the vehicle 100 is electrically connected with the mobile terminal 300, the control unit 180 of the vehicle 100 may be connected to the mobile communication network through the mobile terminal 300. Further, the control unit 180 of the vehicle 100 may also establish a short range wireless communication network through the short range communication module 113.

When the user of the wearable device 200 gets in the vehicle 100, and the wearable device 200 is in the non-wearing state, and the control unit 180 of the vehicle 100 is not electrically connected with the wearable device 200 in operation S707, the control unit 180 of the vehicle 100 may output a message for checking charging through the output unit 140 (S723).

Next, an example of an operation of the wearable device 200 according to the second implementation will be described with reference to FIG. 7.

The wearable device 200 performs pairing with the mobile terminal 300 (S731).

In a state of being paired with the mobile terminal 300, the control unit 280 of the wearable device 200 may receive information stored in the mobile terminal 300 (S732). For example, in a state of being connected with the mobile terminal 300 through short range wireless communication, the control unit 280 of the wearable device 200 may receive alarm or schedule information stored in the mobile terminal 300.

In the state of being connected with the mobile terminal 300 through short range wireless communication, the control unit 280 of the wearable device 200 determines whether the user wears the wearable device 200 (S733). The control unit 280 of the wearable device 200 may determine whether the user wears the wearable device 200 based on sensing data of the wearing detecting unit 241.

When the wearable device 200 is in the non-wearing state, the control unit 280 of the wearable device 200 performs pairing with the vehicle 100 (S735).

After being paired with the vehicle 100, the control unit 280 of the wearable device 200 determines whether the control unit 280 of the wearable device 200 is electrically connected with the vehicle 100 (S737).

When the control unit 280 of the wearable device 200 is electrically connected with the vehicle 100, the control unit 280 of the wearable device 200 transmits information on an electrical connection state with the vehicle 100 to the mobile terminal 300.

Then, the control unit 280 of the wearable device 200 releases the pairing with the mobile terminal 300 (S741).

When the control unit 280 of the wearable device 200 is electrically connected with the vehicle 100, the control unit 280 of the wearable device 200 receives electric energy from the vehicle 100 through the interface unit 260, and is charged by using the received electric energy (SS743).

The wearable device 200 is connected to the mobile communication network through the mobile communication module 212 (see FIG. 5) (S747). In the present example, it is described that the control unit 280 of the wearable device 200 is electrically connected with the vehicle 100, and then is connected to the mobile communication network (S670), but the wearable device 200 may always be connected to the mobile communication network in a state where a power supply of the wearable device 200 is turned on.

The control unit 280 of the wearable device 200 receives predetermined information through the mobile communication network in a state of being connected to the mobile communication network, and transmits the received information to the vehicle 100 through the interface unit 260 (see FIG. 5) (S749).

Then, the control unit 280 of the wearable device 200 determines whether the connection with the vehicle 100 is released (S751), and when the connection with the vehicle 100 is not released, operations of S743 to S749 are performed.

When it is determined that the user wears the wearable device 200 in operation 733, the control unit 280 of the wearable device 200 may transmit information on a wearing state to at least one of the vehicle 100 and the mobile terminal 300 (S753).

In some implementations, when the user of the wearable device 200 gets in the vehicle 100, and the wearable device 200 is in a non-wearing state and is not electrically connected with the vehicle 100 in operation S737, the control unit 280 of the wearable device 200 may transmit information on a non-wearing state to the vehicle 100 (S755).

Next, an operation of the mobile terminal 300 according to the second implementation will be described with reference to FIG. 7.

The mobile terminal 300 is connected with the wearable device 200 through the short range wireless communication. In the state of being connected through the short range wireless communication, the mobile terminal 300 may transmit information stored in the memory of the mobile terminal 300 to the wearable device 200. Here, the information stored in the memory may be alarm or schedule information.

The mobile terminal 300 may receive the information on the wearing state from the wearable device 200.

When the mobile terminal 300 receives information on a connection state with the vehicle 100 from the wearable device 200, the mobile terminal 300 may change a notification method (S775). For example, when the mobile terminal 300 receives the information on the connection state with the vehicle 100 from the wearable device 200 in a state where the notification method of the mobile terminal 300 is set to be silent, the mobile terminal 300 may change the notification method to a sound or a vibration.

When the user of the wearable device 200 gets in the vehicle 100, and the wearable device 200 is in the non-wearing state, and is not electrically connected with the vehicle 100, the mobile terminal 300 may output a message for checking charging of the wearable device 200 (S777).

When the mobile terminal 300 is paired with the vehicle 100 (S781), the mobile terminal 300 transmits information received in the mobile terminal 300 to the vehicle 100 through the mobile communication network (S783).

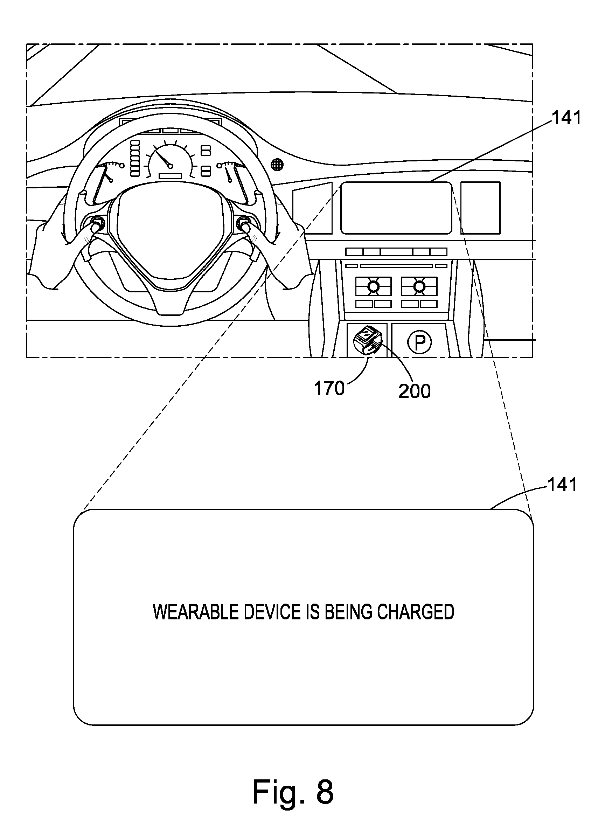

FIGS. 8 to 14 are diagrams illustrating examples of an operation of the vehicle when the vehicle and the wearable device are electrically connected.

FIG. 8 illustrates an example of a message displayed on the display unit 141 of the vehicle 100 when the vehicle 100 and the wearable device 200 are electrically connected.

As illustrated in the example of FIG. 8, the vehicle 100 may include the interface unit 170 in a predetermined region of the center fascia. Here, the interface unit 170 serves as a passage for various kinds of external devices connected to the vehicle 100, and may include a holding part and a connection part. The holding part includes a holding means (for example, a form of a hole, a drawer, and a shelf) on which an external device may be held. The connection part includes a connection means (for example, a connection pin and a connection port) through which an external device may be connected.

When the vehicle 100 is electrically connected with the interface unit 260 of the wearable device 200 through the connection part, the control unit 180 of the vehicle 100 provides electric energy to the wearable device 200. The wearable device 200 performs charging based on the electric energy provided from the vehicle 100. In this case, the control unit 180 of the vehicle 100 displays charge status information of the wearable device 200 on the display unit 141.

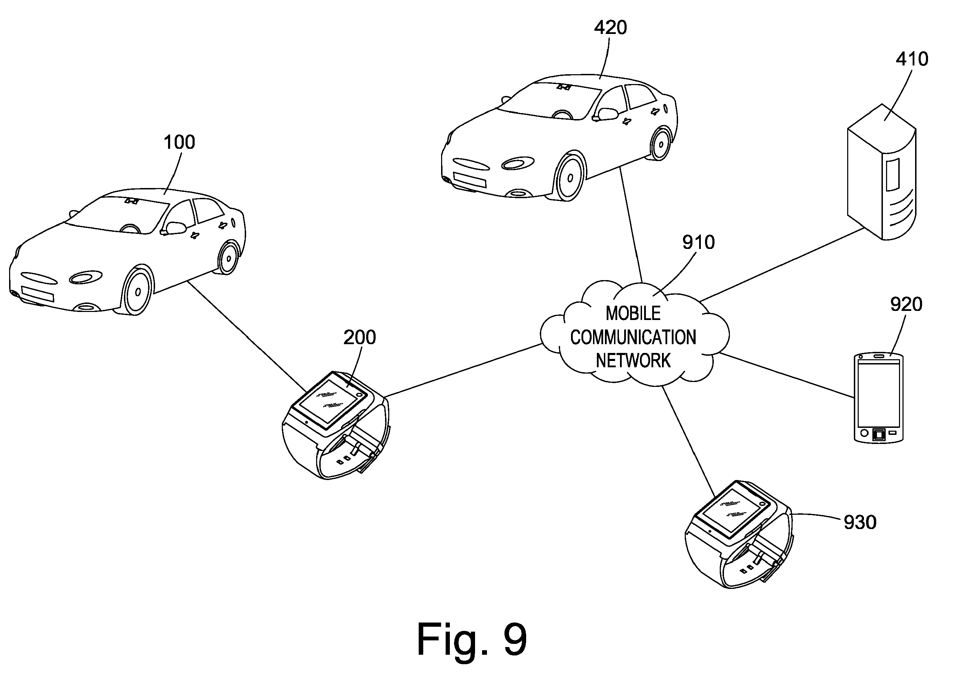

FIG. 9 is a diagram illustrating an example of an operation in which the vehicle 100 is connected to a mobile communication network through the wearable device 200.

Referring to the example of FIG. 9, when the control unit 180 of the vehicle 100 is electrically connected with the wearable device 200, the control unit 180 of the vehicle 100 is connected to a mobile communication network 910 through the wearable device 200. Here, the mobile communication network is a network using any one mobile communication manner among global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), long term evolution (LTE), and/or long term evolution-advanced (LTE-A).

When a communication module for the access to the mobile communication network is not provided in the vehicle 100, and the vehicle 100 is electrically connected to the wearable device 200, the control unit 180 of the vehicle 100 may be connected to the mobile communication network through the mobile communication module 212 (see FIG. 5) included in the wearable device 200.

The control unit 180 of the vehicle 100 may exchange data while communicating with at least one of another vehicle 420, an external server 410, a counterpart mobile terminal 920, and a counterpart wearable device 930 through the mobile communication network 910.

For example, the control unit 180 of the vehicle 100 may receive traffic information collected by another vehicle 420 by communicating with another vehicle 420 through the mobile communication network 910.

For example, the control unit 180 of the vehicle 100 may receive driving assistant information (for example, navigation information, road information, accident information, and emergency rescue information) or infotainment service (for example, the Internet, TV program contents, movies, and games) by communicating with the external server 410 through the mobile communication network 910.

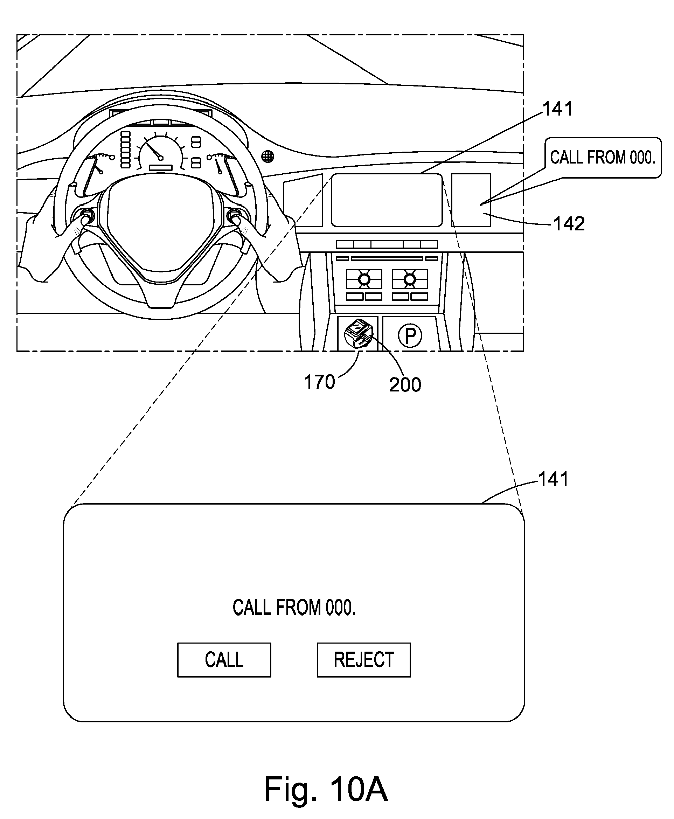

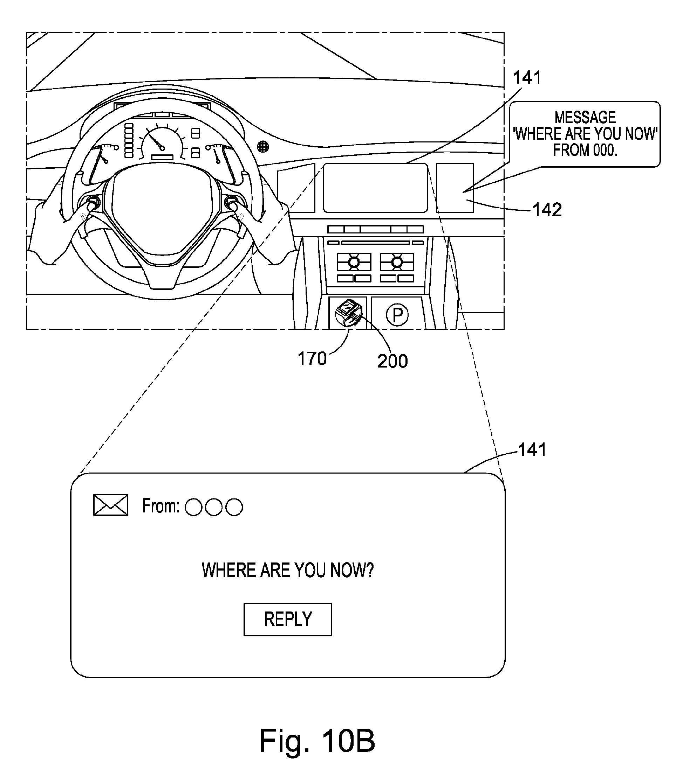

FIGS. 10A and 10B are diagrams illustrating examples of an operation in which the vehicle 100 receives and displays a call signal or a text/multimedia message in a state of being connected to the mobile communication network through the wearable device 200.

The control unit 180 of the vehicle 100 may receive information received in the wearable device 200 from the wearable device 200 through the interface unit 170 (see FIG. 3), and output the received information through the output unit 140.

As illustrated in the example of FIG. 10A, a call is received in the wearable device 200 from the counterpart terminal 920 (see FIG. 9) in the state where the control unit 180 of the vehicle 100 is connected to the mobile communication network 910 (see FIG. 9) through the wearable device 200, the control unit 180 of the vehicle 100 may output call reception information. For example, the control unit 180 of the vehicle 100 may control so that the call reception information is displayed on the display unit 141. As another example, the control unit 180 of the vehicle 100 may control so that the call reception information is output in a form of a voice through the sound output unit 142.

Next, the control unit 180 of the vehicle 100 may receive a user input for a call connection through the input unit 120. Then, when the user input for the call connection is received, the control unit 180 of the vehicle 100 may perform a voice input and output operation by controlling the microphone 123 and the sound output unit 142 so that the user may have a phone call with the counterpart terminal 920 (see FIG. 9). The output user voice may be transmitted to the counterpart terminal 920 (see FIG. 9) through the mobile communication network 910 (see FIG. 9).

As illustrated in the example of FIG. 10B, a text message is received in the wearable device 200 from the counterpart terminal 920 (see FIG. 9) in the state where the control unit 180 of the vehicle 100 is connected to the mobile communication network 910 (see FIG. 9) through the wearable device 200, the control unit 180 of the vehicle 100 may output the received text message through the display unit 141. As another example, the control unit 180 of the vehicle 100 may TTS-convert the received text message into speech and output the speech in a form of a voice through the sound output unit 142.

Next, the control unit 180 of the vehicle 100 may receive a user input for transmitting a text message (reply) through the input unit 120. For example, the control unit 180 of the vehicle 100 may receive the user input through a touch input for the display unit 141 or a voice input through the microphone 123. When the voice input through the microphone 123 is received, the control unit 180 of the vehicle 100 STT-converts the received voice input into text, and then transmits the text to the counterpart terminal 920 (see FIG. 9).

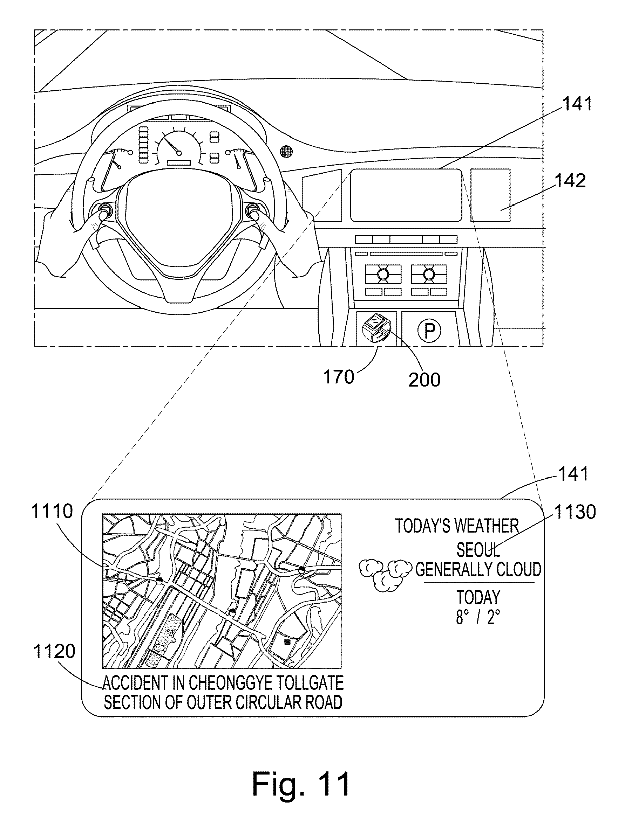

FIGS. 11 to 13 are diagrams of examples of an operation of receiving information from an external server (e.g., the external server 410) (see FIG. 9) and displaying the received information.

The control unit 180 of the vehicle 100 may be connected to the external server 410 (see FIG. 9) in a state of being connected to the mobile communication network 910 (see FIG. 9) through the wearable device 200. Here, the external server may be a traffic information providing server or a weather information providing server. The control unit 180 of the vehicle 100 may receive various pieces of information from the external server 410 (see FIG. 9) and output the received information.

For example, as illustrated in FIG. 11, the control unit 180 of the vehicle 100 may receive navigation information from the traffic information providing server, and display the received navigation information 1110 on a predetermined region of the display unit 141.

For example, as illustrated in FIG. 11, the control unit 180 of the vehicle 100 may receive road traffic information from the traffic information providing server, and display the received road traffic information 1120 on a predetermined region of the display unit 141. The control unit 180 of the vehicle 100 may also output the received road traffic information in a form of a voice through the sound output unit 142.

For example, as illustrated in the example of FIG. 11, the control unit 180 of the vehicle 100 may receive weather information from the weather information providing server, and display the received weather information 1130 on a predetermined region of the display unit 141. The control unit 180 of the vehicle 100 may also output the received weather information in a form of a voice through the sound output unit 142.

In some implementations, the control unit 180 of the vehicle 100 may be connected to the external server 410 (see FIG. 9) in a state of being connected to the mobile communication network 910 (see FIG. 9) through the wearable device 200. Here, the external server may be a web portal server or an instant message service providing server.

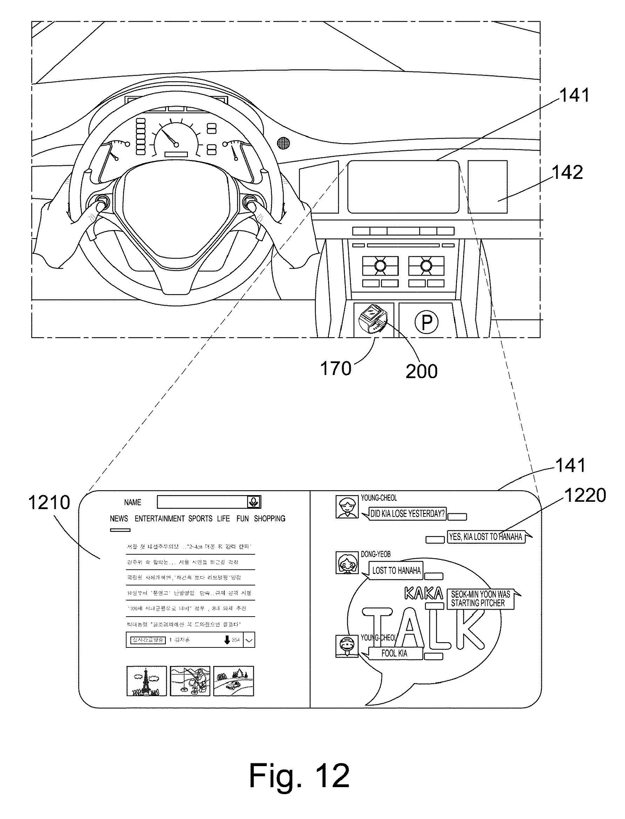

For example, as illustrated in FIG. 12, the control unit 180 of the vehicle 100 may be connected to the web portal server and receive a web page image, and display the received web page image 1210 on a predetermined region of the display unit 141.

For example, as illustrated in FIG. 12, the control unit 180 of the vehicle 100 may be connected to the instant message service providing server and receive an instant message image, and display the received instant message image 1220 on a predetermined region of the display unit 141. In this case, the user may exchange an instant message with a counterpart terminal through the displayed instant message image 1220.

In some implementations, the control unit 180 of the vehicle 100 may display a plurality of pieces of information on one screen. For example, first information may be displayed on a first region of the display unit 141, second information may be displayed on a second region of the display unit 141, and third information may be displayed on a third region of the display unit 141. Further, the control unit 180 of the vehicle 100 may adjust sizes of the first to third regions according to a user input.

The control unit 180 of the vehicle 100 may, in some cases, be connected to the external server 410 (see FIG. 9) in a state of being connected to the mobile communication network 910 (see FIG. 9) through the wearable device 200. Here, the external server may be an image or game service providing server.

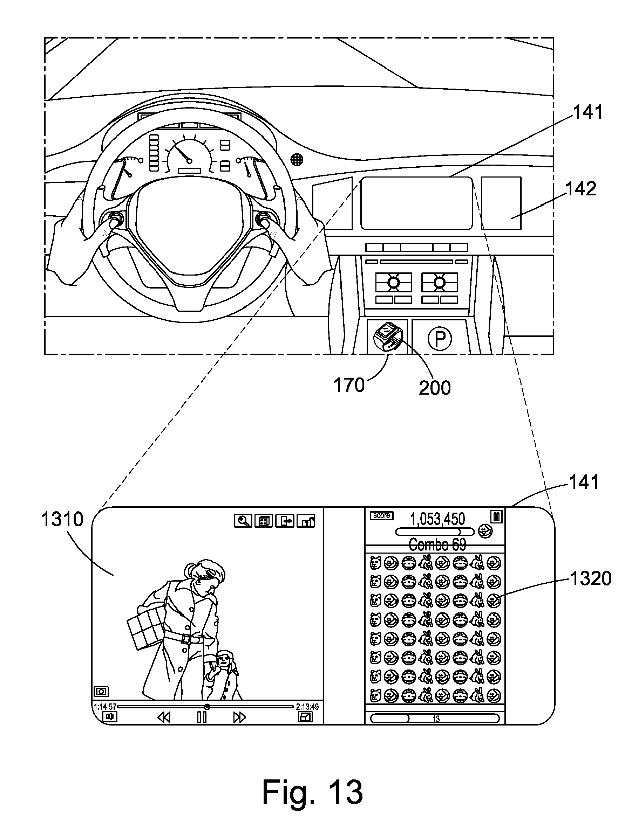

For example, as illustrated in FIG. 13, the control unit 180 of the vehicle 100 may be connected to the image service providing server and receive image contents, and display the received image contents 1310 on a predetermined region of the display unit 141. In this case, the control unit 180 of the vehicle 100 may output a sound included in the image contents through the sound output unit 142.

For example, as illustrated in FIG. 13, the control unit 180 of the vehicle 100 may be connected to the game service providing server and receive game contents, and display the received game contents 1320 on a predetermined region of the display unit 141. In this case, the control unit 180 of the vehicle 100 may output a sound included in the game contents through the sound output unit 142.

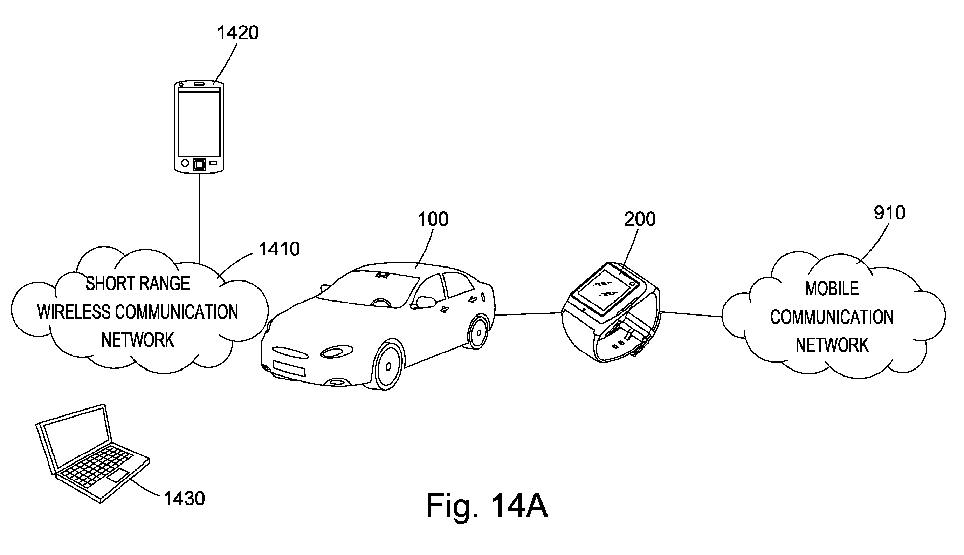

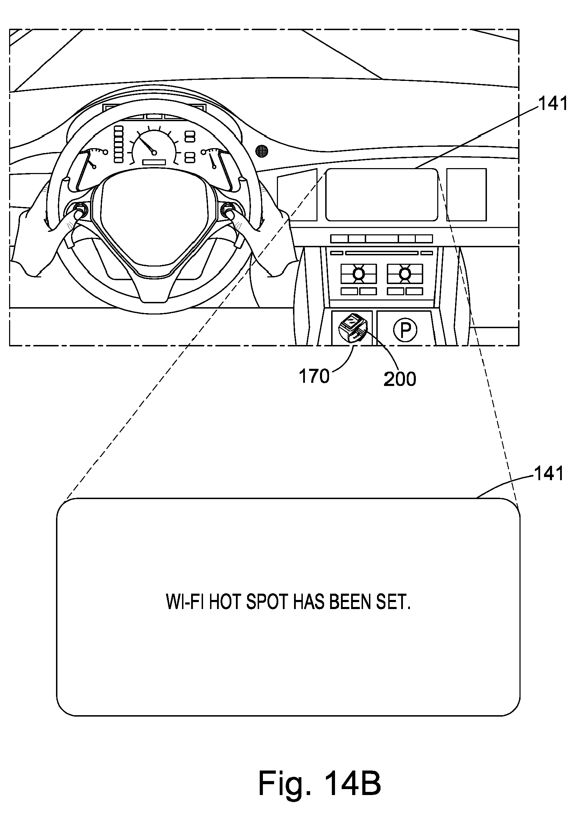

FIGS. 14A and 14B are diagrams illustrating examples of an operation of establishing a short range wireless communication network.

Referring to the example of FIG. 14A, the control unit 180 of the vehicle 100 may establish a short range wireless communication network 1410 through the short range communication module 113 in a state of being connected to the mobile communication network 910 (see FIG. 9) through the wearable device 200.

In this case, the vehicle 100 or the wearable device 200 is operated as an access point (AP). The vehicle 100 or the wearable device 200 may serve as a gateway or a router. One or more devices 1420 and 1430 may be connected to the established short range wireless communication network 1410. The devices 1420 and 1430 may be connected to the mobile communication network 910 through the vehicle 100 and the wearable device 200.

Referring to the example of FIG. 14B, when the short range wireless communication network is established, the control unit 180 of the vehicle 100 may display information on an establishment state of the short range wireless communication network on the display unit 141.

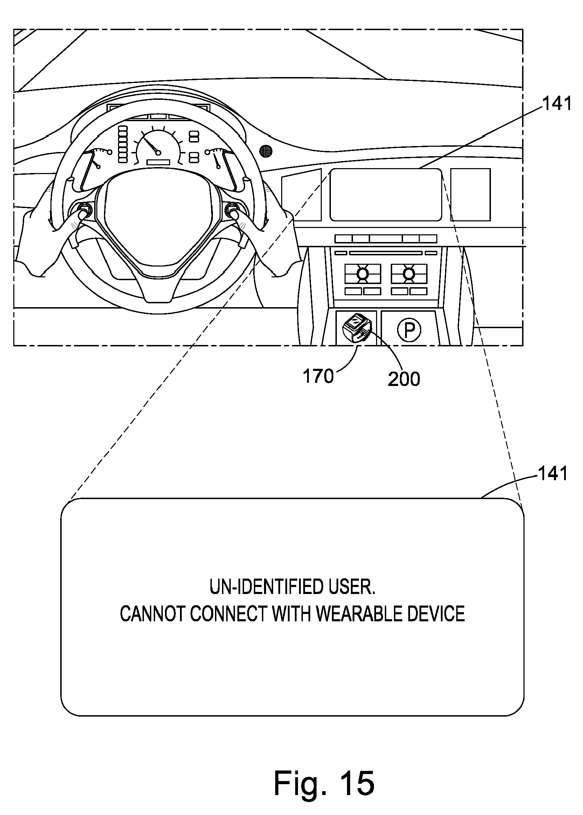

FIG. 15 is a diagram illustrating an example of an operation of a vehicle performing identification of a passenger of the vehicle.

Referring to the example of FIG. 15, the control unit 180 of the vehicle 100 may perform identification on a passenger possessing the wearable device 200 before being paired with the wearable device 200 or being electrically connected with the wearable device 200.

For exmaple, the control unit 180 of the vehicle 100 detects biometric information about a passenger through the biometric information detecting unit 131. The control unit 180 of the vehicle 100 may be matched with the wearable device 200 and compare first biometric information about a user of the wearable device stored in the memory 160 (see FIG. 3) and second biometric information about the passenger detected through the biometric information detecting unit 131.

When the first biometric information is matched with the second biometric information, the passenger is identified, and the control unit 180 of the vehicle 100 may be connected with the wearable device 200 through the short range wireless communication or electrically connected with the wearable device 200.

When the first biometric information is not matched with the second biometric information, so that the passenger is not identified, the control unit 180 of the vehicle 100 is not connected with the wearable device 200 through the short range wireless communication and is not electrically connected with the wearable device 200.

FIG. 15 illustrates the fingerprint scanner 131 as an example of the biometric information detecting unit 131, but implementations are not limited thereto, and the vehicle 100 may include an iris scanner or a retina scanner and obtain iris scan information or retina scan information about a passenger. In some cases, the biometric information detecting unit 131 may include the camera 122 and obtain hand geometry information and facial recognition information about a passenger. As another example, the biometric information detecting unit 131 may include the microphone 123 to obtain voice recognition information about a passenger.

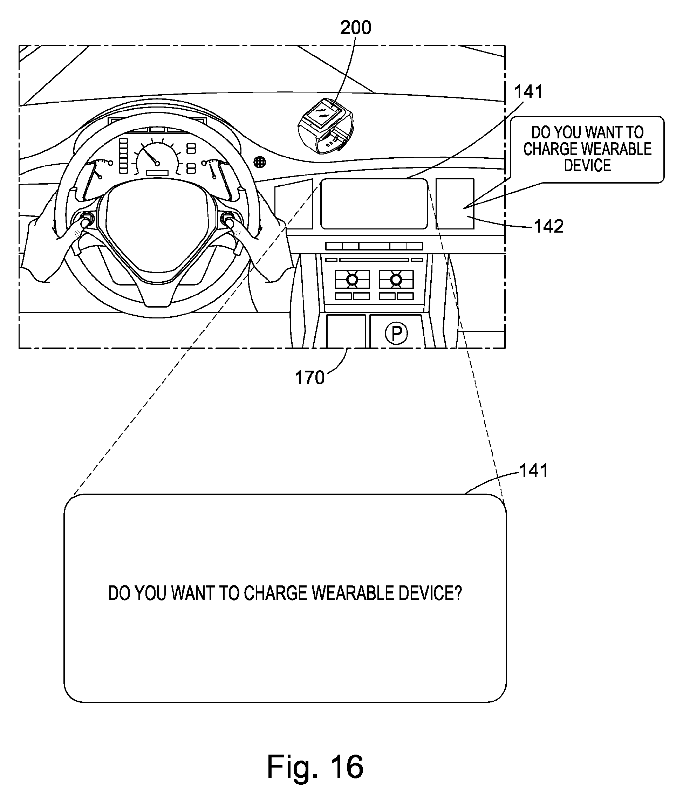

FIG. 16 is a diagram of an example of an operation of a vehicle when a user does not wear a wearable device.

Referring to the example of FIG. 16, when the control unit 180 of the vehicle 100 is not electrically connected with the wearable device 200 in the non-wearing state, the control unit 180 of the vehicle 100 may display a message for checking charging through the display unit 141. Further, the control unit 180 of the vehicle 100 may output the message for checking charging through the sound output unit 142 in a form of a voice.

As described above, the output of the message for checking charging has an effect in that when the wearable device 200 is not connected with the control unit 180 of the vehicle 100 even though the user of the wearable device 200 releases the wearing state for the electrical connection with the vehicle 100, the user may recognize the disconnection.

In some implementations, the information on the wearing state may be detected by the wearing detecting unit 241 included in the wearable device 200. The control unit 180 of the vehicle 100 may receive the information on the detected wearing state.

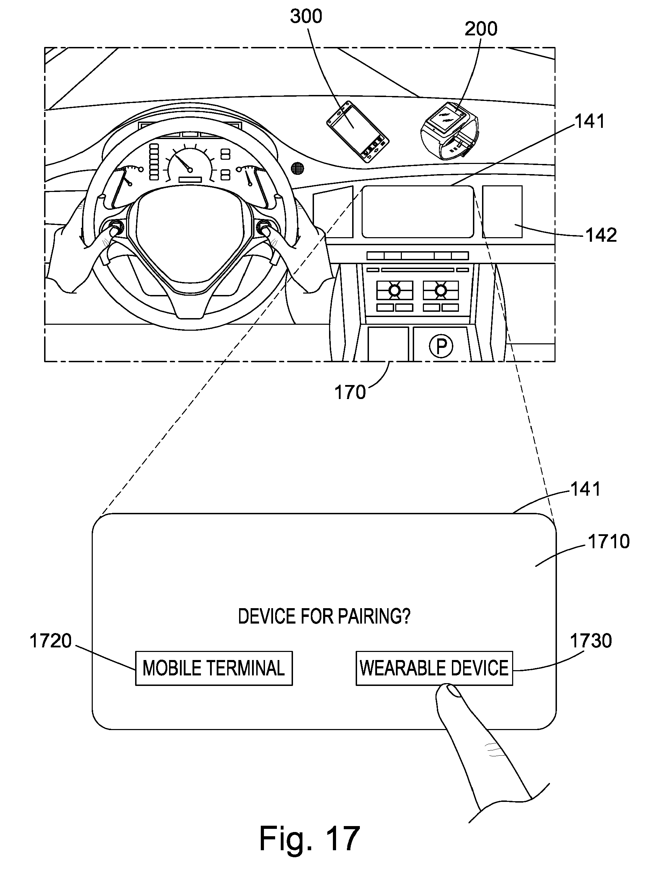

FIGS. 17 to 20 are diagrams of examples of an operation of a vehicle in which a passenger of the vehicle possesses both a wearable device and a mobile terminal.

As illustrated in the example of FIG. 17, the control unit 180 of the vehicle 100 receives information on a wearing state of the wearable device 200 from the wearable device 200. For example, when the user wears the wearable device 200, the control unit 180 of the vehicle 100 receives the information on the wearing state. When the user does not wear the wearable device 200, the control unit 180 of the vehicle 100 receives information on a non-wearing state. Here, the information on the wearing state or the non-wearing state may be received in a form of a beacon signal before the vehicle 100 is paired with the wearable device 200.

After the information on the wearing state or the non-wearing state is received, the control unit 180 of the vehicle 100 displays a selection input image 1710 for selecting one of the wearable device 200 and the mobile terminal 300 to be first paired on the display unit 141.

When the selection input for the mobile terminal 1720 or the wearable device 1730 is received, the control unit 180 of the vehicle 100 performs pairing with the selected device.

In some implementations, the pairing may also be performed according to a preset priority. In a case where it is set that the control unit 180 of the vehicle 100 is paired with the wearable device 200 in the wearing state with a top priority, when receiving the information on the wearing state, the control unit 180 of the vehicle 100 performs a pairing operation with the wearable device 1730. In a case where it is set that the control unit 180 of the vehicle 100 is paired with the mobile terminal 300 in the non-wearing state as a top priority, when receiving the information on the non-wearing state, the control unit 180 of the vehicle 100 performs the pairing operation with the mobile terminal 300.

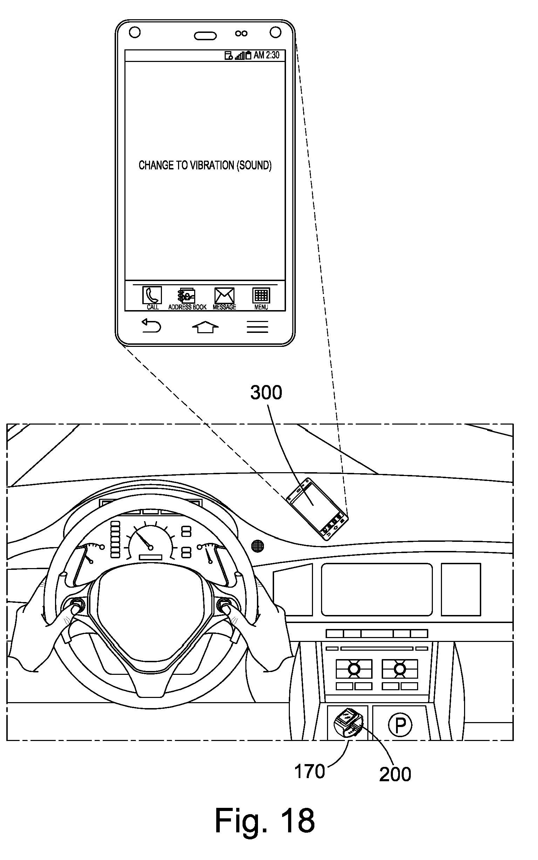

As illustrated in the example of FIG. 18, when the wearable device 200 is electrically connected with the vehicle 100 in a state where the wearable device 200 is paired with the mobile terminal 300, the control unit 280 of the wearable device 200 transmits information on an electrical connection state with the vehicle 100 to the mobile terminal 300.

In this case, the mobile terminal 300 may change a notification method.

For example, when the user takes the wearable device in a state where the notification method of the mobile terminal 300 is set to be silent and the user recognizes the notification of the mobile terminal 300 through the wearable device 200, the user cannot recognize the notification of the mobile terminal 300. Accordingly, when the wearable device 200 is electrically connected with the vehicle 100 and the notification method of the mobile terminal 300 is changed from silent to a vibration or a sound, there is an effect in that the user may recognize the notification of the mobile terminal 300.

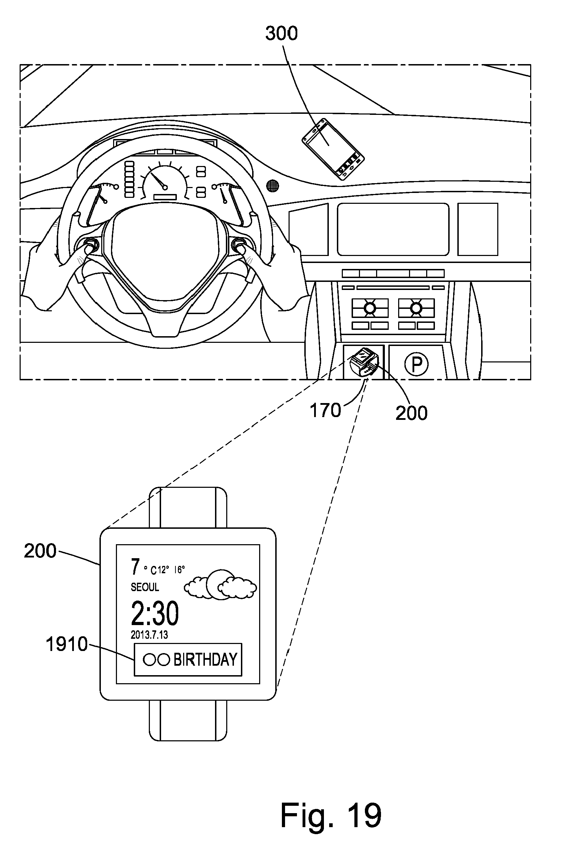

As illustrated in the example of FIG. 19, when the wearable device 200 is electrically connected with the vehicle 100 in a state where the wearable device 200 is paired with the mobile terminal 300, information stored in the mobile terminal 300 may be output through the wearable device 200. For example, when a schedule or an alarm is set and stored in the mobile terminal, the schedule or the alarm 1910 may be output through the output unit 250 of the wearable device 200.

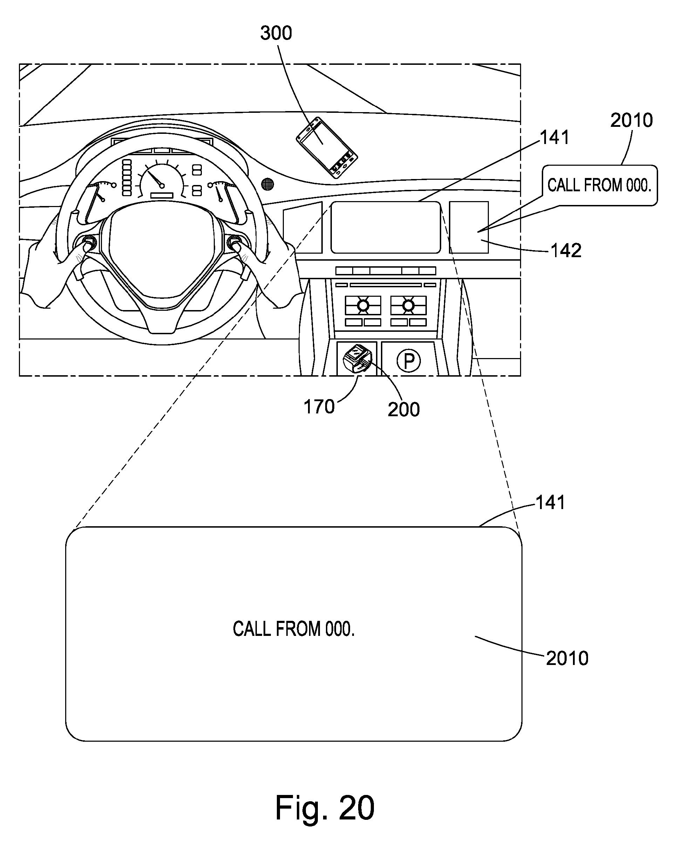

As illustrated in the example of FIG. 20, when the wearable device 200 is electrically connected with the vehicle 100 in a state where the wearable device 200 is paired with the mobile terminal 300, information received in the mobile terminal 300 through the mobile communication network may be output through the vehicle 100. For example, when a call is received in the mobile terminal 300 through the mobile communication network, call reception information 2010 may be displayed through the display unit 141 of the vehicle 100 or output through the sound output unit 142.

As described above, in the state where the wearable device 200 is electrically connected with the vehicle 100, information, which the user may need to immediately recognize, is output through the vehicle 100, and information, which the user may not need to immediately recognize, is output through the wearable device 200, so that there is an effect in that a quantity of information recognized by the user while driving is decreased, thereby helping the user to safely drive.

The methods, techniques, systems, and apparatuses described herein may be implemented in digital electronic circuitry or computer hardware, for example, by executing instructions stored in tangible computer-readable storage media.

Apparatuses implementing these techniques may include appropriate input and output devices, a computer processor, and/or tangible computer-readable storage media storing instructions for execution by a processor.

A process implementing techniques disclosed herein may be performed by a processor executing instructions stored on a tangible computer-readable storage medium for performing desired functions by operating on input data and generating appropriate output. Suitable processors include, by way of example, both general and special purpose microprocessors. Suitable computer-readable storage devices for storing executable instructions include all forms of non-volatile memory, including, by way of example, semiconductor memory devices, such as Erasable Programmable Read-Only Memory (EPROM), Electrically Erasable Programmable Read-Only Memory (EEPROM), and flash memory devices; magnetic disks such as fixed, floppy, and removable disks; other magnetic media including tape; and optical media such as Compact Discs (CDs) or Digital Video Disks (DVDs). Any of the foregoing may be supplemented by, or incorporated in, specially designed application-specific integrated circuits (ASICs).

Although the operations of the disclosed techniques may be described herein as being performed in a certain order and/or in certain combinations, in some implementations, individual operations may be rearranged in a different order, combined with other operations described herein, and/or eliminated, and desired results still may be achieved. Similarly, components in the disclosed systems may be combined in a different manner and/or replaced or supplemented by other components and desired results still may be achieved.

## Claims

1. A method of operating a vehicle, comprising:
determining whether a wearable device is electrically connected to an interface unit of the vehicle;
in response to determining that the wearable device is electrically connected to the interface unit, providing electric energy for charging to the wearable device through the interface unit;
connecting the vehicle to a mobile communication network through the wearable device; and
outputting information received from the mobile communication network through the wearable device.

2. The method of claim 1, further comprising:
receiving information from an external server connected to the mobile communication network, wherein the information is driving assistant information.

3. The method of claim 1 or 2, further comprising:
establishing a short range wireless communication network providing access to the mobile communication network, through the wearable device.

4. The method of claim 1, wherein the information is call reception information or text message reception information received from a mobile terminal also connected to the mobile communication network, optionally, wherein the outputting includes text-to-speech converting a text message into speech.

5. The method of any preceding claim, further comprising:
receiving information on a wearing state of the wearable device; and
outputting a message for checking whether the wearable device is charged in response to determining that the wearable device is in a non-wearing state and is not electrically connected.

6. The method of any preceding claim, further comprising:
receiving information on a wearing state of the wearable device; and
in response to receiving information on a wearing state of the wearable device, receiving user selection of the the wearable device or the mobile terminal.

7. The method of any preceding claim, further comprising:
checking identification of a passenger of the vehicle,
wherein the electrical connection with the wearable device is performed or is not performed according to a result of the checking.

8. The method of claim 7, wherein the checking identification includes comparing first biometric recognition information stored in a memory with second biometric recognition information obtained from the passenger.

9. A method of operating a wearable device, comprising:
determining whether the wearable device is electrically connected to an interface unit of a vehicle;
charging with electric energy provided from the vehicle in response to determining that the vehicle is electrically connected; and
transmitting information received from a mobile communication network to the vehicle.

10. The method of claim 9, further comprising:
connecting with a mobile terminal through a short range communication; and
releasing the connection with the mobile terminal through the short range communication when the vehicle is electrically connected, optionally, further comprising:
transmitting information on a connection state with the vehicle to the mobile terminal in order to change a notification method of the mobile terminal when the vehicle is electrically connected.

11. A vehicle, comprising:
an output unit;
an interface unit arranged to electrically connect with a wearable device; and
a control unit configured to control electric energy for charging the wearable device through the interface unit when electrically connected with the wearable device, and connect to a mobile communication network through the wearable device, and configured to control information from the mobile communication network received through the wearable device for output through the output unit.

12. The vehicle of claim 11, wherein the information is driving assistant information received from an external server connected through the mobile communication network.

13. The vehicle of claim 11 or 12, further comprising:
a short range communication module configured to perform short range communication with an external device,
wherein the control unit is arranged to control the short range communication module to produce a short range wireless communication network connected with the mobile communication network through the wearable device.

14. The vehicle of claim 11, further comprising:
a short range communication module configured to perform short range communication with the wearable device,
wherein the control unit is arranged to control information on a wearing state of the wearable device received through the short range communication module, and control a message prompting a user to check charging of the wearable device for output through the output unit when not electrically connected with the wearable device and in a non-wearing state.

15. The vehicle of claim 11, further comprising:
a memory configured to store first biometric recognition information; and
a biometric information detecting unit configured to detect second biometric recognition information about a passenger,
wherein the control unit compares the first and second biometric recognition information and controls the electrical connection with the wearable device to be performed or not-performed according to a result of the determination.
